# EUROPEAN PATENT APPLICATION

(11) **EP 4 387 328 A2**
(43) Date of publication of application: **19.06.2024**
(21) Application number: 24155159.7
(22) Date of filing: 30.07.2020
(51) Int. Cl.: H04W 36/00

(54) **COMMUNICATION METHOD AND COMMUNICATIONS APPARATUS**

(62) Divisional of application: 20946714.1
(71) Applicant: Huawei Technologies Co., Ltd., Shenzhen, Guangdong 518129 (CN)
(72) Inventor: QIANG, Li, Shenzhen, 518129 (CN); YANG, Linping, Shenzhen, 518129 (CN); FAN, Jing, Shenzhen, 518129 (CN); TAN, Jiayao, Shenzhen, 518129 (CN); LI, Meng, Shenzhen, 518129 (CN)
(74) Representative: Roth, Sebastian

(57) **Abstract**

A communication method and a communications apparatus are provided, and the method may be applied to the communications field. The method may include: selecting or re-selecting, by a terminal device, from a first cell to a second cell through cell selection or re-selection, where radio access technologies of the first cell and the second cell are different, and the terminal device is in inactive mode in the first cell, and re-selects to the second cell through cell re-selection; and initiating, by the terminal device, a registration procedure after completing the cell re-selection. When the terminal device in inactive mode performs cell re-selection based on different radio technologies, the terminal device initiates the registration procedure or a service request procedure, for NAS signaling connection recovery. When the terminal device changes a radio access technology, a network device can update information.

## Description

### TECHNICAL FIELD

This application relates to the field of communications technologies, and in particular, to a communication method and a communications apparatus.

### BACKGROUND

In a current communications system, a terminal device performs cell selection or re-selection based on a mobility requirement. In some scenarios, radio access technologies of different cells are different. When the terminal device moves between cells using different radio access technologies, current information of the terminal device usually cannot be updated to a network device in a timely manner. Consequently, communication between the network device and the terminal device consumes more time and more signaling, causing a waste of resources.

### SUMMARY

This application provides a communication method and a communications apparatus, to avoid a status on a terminal device side is asynchronized with the statuson a network device side caused by a change of a radio access technology used by a terminal device.

According to a first aspect, a communication method is provided, and includes: A terminal device selects or re-selects from a first cell to a second cell through cell selection or re-selection, where radio access technologies of the first cell and the second cell are different. The radio access technology of the first cell may be new radio, and the radio access technology of the second cell may be evolved universal terrestrial radio access. Alternatively, the radio access technology of the first cell may be evolved universal terrestrial radio access, and the radio access technology of the second cell may be new radio. The terminal device is in inactive mode in the first cell, and selects or re-selects to the second cell through cell selection or re-selection. The terminal device initiates a registration procedure or a service request procedure after completing the cell selection or re-selection. The terminal device may initiate the registration procedure or the service request procedure in the first cell, or the terminal device may initiate the registration procedure or the service request procedure in the second cell. The registration procedure and/or the service request procedure are/is used for non-access stratum signaling connection recovery. The registration procedure may include an initial registration procedure or a mobility and periodic registration update procedure.

This embodiment of this application provides a new condition for initiating the registration procedure or the service request procedure. When the terminal device in inactive mode performs inter-radio access technology cell selection or re-selection (inter-RAT cell (re-)selection), the terminal device initiates the registration procedure or the service request procedure, for the NAS signaling connection recovery. When the terminal device changes a radio access technology, a network device can update information.

In a possible implementation of the first aspect, that the terminal device initiates a registration procedure includes: The terminal device sends first indication information, where the first indication information is used to notify a network device to switch the terminal device to an idle mode; or that the terminal device initiates a registration procedure includes: The terminal device sends first indication information, where the first indication information is used to notify a network device that the terminal device is in idle mode.

The network device may be a core network device or an access network device. An access network device to which the first cell belongs may be referred to as a source access network device S-RAN, and an access network device to which the second cell belongs may be referred to as a target access network device T-RAN. The S-RAN and T-RAN can access a same core network. The core network device may be a 5G core network device, and the first cell and the second cell are connected to the 5G core network device. For example, the core network device may be an AMF. The first indication information sent in the registration procedure may be the first indication information sent to the AMF. A registration area is allocated to the terminal device, and the first cell and the second cell may be in the registration area.

In this embodiment of this application, the terminal device needs to send, to the network device, status information indicating that the terminal device is currently in idle mode or status information indicating that the terminal device is about to change to the idle mode. The registration procedure used for the NAS signaling connection recovery is a procedure in which the terminal device in idle mode can send information to the network device, and a request message in the registration procedure may be used to carry the first indication information. In this embodiment of this application, the terminal device may send the first indication information to the network device by initiating the registration procedure, and the network device may perform status switching based on the first indication information. In this way, the terminal device and the network device synchronously maintain the idle mode. Therefore, an air interface resource waste in a process in which the network device transmits data/signaling to the terminal device is avoided, a downlink data/signaling transmission delay is reduced, and a data loss, a call failure, or the like caused by an excessively long transmission delay is avoided.

In still another possible implementation of the first aspect, the terminal device sends a registration request message, where the registration request message is used to initiate the registration procedure, and the first indication information may be carried in the registration request message. When the registration procedure is initial registration, the registration request message is an initial registration request message. When the registration procedure is a mobility registration update procedure, the registration request message is a mobility registration updating request message. When the registration procedure is a periodic registration update procedure, the registration request message is a periodic registration update request message. Alternatively, the terminal device may send a service request message, where the service request message is used to initiate the service request procedure, and the service request message carries the first indication information. The terminal device in idle mode may send the first indication information to the network device by including the first indication information in the service request message, to notify the network device that the terminal device is in idle mode, or notify the network device to switch the terminal device to the idle mode.

In still another possible implementation of the first aspect, an access stratum of the terminal device notifies a non-access stratum of the terminal device to send the first indication information. The terminal device includes the access stratum and the non-access stratum. The non-access stratum is a function layer between the terminal device and the core network, and the non-access stratum supports transmission of a service message and a signaling message between the core network and the terminal device. The access stratum is a function layer between the access network device and user equipment. Relative to the access stratum, the non-access stratum and a layer above the non-access stratum may be referred to as upper layers (upper layer(s)). Relative to the non-access stratum, the access stratum and a layer below the access stratum may be referred to as lower layers (lower layer(s)).

The access stratum may receive system information of the second cell, where the system information includes at least one of the following information: identification information of the second cell, identification information of a public land mobile network supported by the second cell, or information about the radio access technology of the second cell. The access stratum perceives, based on the system information, that the radio access technologies of the first cell and the second cell are different. Because the access stratum perceives a radio access technology change, the terminal device may switch to the idle mode. The access stratum may indicate the non-access stratum to send the first indication information. An indication manner may be sending indication information or using a cause value. The access stratum notifies, by using the cause value, the non-access stratum to send the first indication information, where the cause value is used to indicate, to the non-access stratum, a reason why the terminal device switches to the idle mode. The cause value may be that the radio access technologies of the first cell and the second cell are different, or the cause value may indicate that the terminal device performs inter-radio access technology cell selection or re-selection (inter-RAT cell (re-)selection). In this embodiment of this application, the access stratum perceives, by using the system information, that the current RAT changes, and uses the cause value to indicate the non-access stratum to send the first indication information to notify the network device that the terminal device is in idle mode. The manner of notification by using the cause value is simple and easy to implement. In addition, the non-access stratum does not need to perceive the RAT change, and the non-access stratum only needs to send the first indication information based on a notification of the access stratum.

In still another possible implementation of the first aspect, the access stratum of the terminal device receives system information of the second cell, where the system information of the second cell includes information about the second cell. The system information of the second cell includes at least one of the following: identification information of the second cell, identification information of a public land mobile network supported by the second cell, or information about the radio access technology of the second cell. The access stratum of the terminal device may notify the non-access stratum of the terminal device of the received information about the second cell. The terminal device can perceive the radio access technology change based on the information about the second cell, so that the non-access stratum of the terminal device sends the first indication information based on the information about the second cell that is received by the access stratum of the terminal device. The terminal device may switch to the idle mode. When the terminal device switches to the idle mode, the first indication information is used to notify the network device that the terminal device is in idle mode. Alternatively, the first indication information is used to notify the network device to switch the terminal device to the idle mode.

In this embodiment of this application, the non-access stratum of the terminal device can perceive the RAT change based on the information about the second cell, and can autonomously send the first indication information without an indication of the access stratum.

In still another possible implementation of the first aspect, the network device may be an AMF, and the AMF may perform status synchronization based on the first indication information. The network devices may perform status synchronization in two manners. In one case, when the terminal device is already in idle mode, the network device may perform the following steps for status synchronization:

The AMF deletes terminal context information locally stored by the AMF. The AMF notifies the access network device to delete a signaling plane connection and a user plane resource between the access network device and the terminal device. The AMF indicates, to the S-RAN to which the first cell belongs, that the terminal device has entered the idle mode. Optionally, the S-RAN deletes the context information of the terminal device based on the indication, and the AMF notifies, via an SMF, a UPF to release an N3 interface resource. N3 is an interface between the access network device and the core network device.

In another case, when the terminal device is still in connected mode, the network device may perform the following steps for status synchronization:

The AMF deletes terminal context information locally stored by the AMF. The AMF indicates the terminal device to release a NAS connection. The AMF indicates, to the S-RAN to which the first cell belongs, that the terminal device has entered the idle mode. The S-RAN deletes the context information of the terminal device based on the indication, and the S-RAN initiates release of an RRC connection to the terminal device. If the access network device T-RAN to which the second cell belongs stores the context information of the terminal device, the AMF indicates, to the T-RAN, that the terminal device has entered the idle mode. Optionally, the T-RAN deletes the context information of the terminal device based on the indication, and/or the T-RAN initiates release of an RRC connection to the terminal device.

In this embodiment of this application, the network device performs status synchronization based on the first indication information and a current status of the terminal device. In this way, both the terminal device and the network device keep in idle mode, thereby avoiding an air interface resource waste in a signaling transmission process.

A second aspect provides a communication method, including: A terminal device selects or re-selects from a first cell to a second cell through cell selection or re-selection, where radio access technologies of the first cell and the second cell are different. The radio access technologies of the first cell and the second cell are different. The radio access technology of the first cell may be new radio, and the radio access technology of the second cell may be evolved universal terrestrial radio access. Alternatively, the radio access technology of the first cell may be evolved universal terrestrial radio access, and the radio access technology of the second cell may be new radio. The terminal device is in inactive mode in the first cell, and selects or re-selects to the second cell through cell selection or re-selection. The terminal device sends an access stratum message after completing the cell selection or re-selection, where the access stratum message is used to request radio resource connection release. The first cell and the second cell may be in a registration area allocated to the terminal device.

In this embodiment of this application, the terminal device in inactive mode performs inter-radio access technology cell selection or re-selection, the terminal device sends a radio resource connection release request message to a network device, and the network device synchronizes a status of the terminal device and a status in the network device to an idle mode based on the received request message. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided. In a possible implementation of the second aspect, the access stratum message includes a cause value, and the cause value refers to the terminal device requests the radio resource connection release. In this embodiment of this application, an access stratum of the terminal device may indicate the network device to release a radio resource connection. An indication manner may be requesting, by using the cause value, the network device to release the radio resource connection.

In still another possible implementation of the second aspect, the terminal device sends an access stratum message to an access network device to which the first cell belongs, and the access network device to which the first cell belongs releases a radio resource connection based on the access stratum message. The access network device may further indicate a core network device to release an N3 resource connection, so that the terminal device, the access network device, and the core network device are synchronously in idle mode. N3 is an interface between the access network device and a core network device. That the terminal device selects or re-selects to the second cell may mean that the terminal device selects the second cell, but has not yet camped on the second cell, and still camps on the first cell. In this embodiment of this application, the terminal device directly sends the access stratum message to the access network device to which the first cell belongs, and the access network device to which the first cell belongs directly releases the radio resource connection. The core network device does not need to indicate the access network device to release the radio resource connection. The first cell and the second cell may be connected to a 5G core network device.

In still another possible implementation of the second aspect, the terminal device camps on the second cell through cell re-selection. In this case, the terminal device sends an access stratum message to the second cell. In other words, the terminal device sends the access stratum message to an access network device to which the second cell belongs, and the access network device to which the second cell belongs sends a first message to a core network device, where the first message is used to request the core network device to indicate the first cell to release a radio resource connection. The core network device sends radio resource connection release indication information to the first cell based on the received first message, to indicate an access network device to which the first cell belongs to release the radio resource connection. This embodiment of this application provides a more flexible method for indicating the first cell to release the radio resource connection, so that the network device and the terminal device are synchronized in idle mode. Therefore, an air interface resource waste caused when the network device sends data/signaling to the terminal device is avoided, a downlink data/signaling transmission delay is reduced, and a data loss, a call failure, or the like caused by an excessively long transmission delay is avoided.

A third aspect provides a communications apparatus. The communications apparatus in this embodiment of this application may be a terminal device, and includes: a processing module, configured to enable the terminal device to re-select from a first cell to a second cell through cell cell re-selection, where radio access technologies of the first cell and the second cell are different. The radio access technology of the first cell may be new radio, and the radio access technology of the second cell may be evolved universal terrestrial radio access. Alternatively, the radio access technology of the first cell may be evolved universal terrestrial radio access, and the radio access technology of the second cell may be new radio. The terminal device is in radio resource control inactive mode in the first cell. The terminal device is in inactive mode in the first cell, and re-selects to the second cell through cell re-selection. A transceiver module of the terminal device is configured to send a registration request message or a service request message, where the registration request message or the service request message is used to initiate a registration procedure. After completing the cell re-selection, the terminal device may initiate the registration procedure or a service request procedure in the first cell, or the terminal device may initiate the registration procedure or a service request procedure in the second cell. The registration procedure and/or the service request procedure are/is used for non-access stratum signaling connection recovery. The registration procedure may include an initial registration procedure or a mobility and periodic registration update procedure.

The communications apparatus in this embodiment of this application can initiate the registration procedure or the service request procedure based on a new trigger condition. When the terminal device in inactive mode performs cell re-selection based on different radio technologies, the terminal device initiates the registration procedure or the service request procedure, for NAS signaling connection recovery. When the terminal device changes a radio access technology, a network device can update information.

In a possible implementation of the third aspect, the transceiver module of the terminal device sends first indication information, where the first indication information is used to notify the network device to switch the terminal device to an idle mode. Alternatively, the terminal device switches to an idle mode. That the terminal device initiates a registration procedure includes: sending, by the terminal device, first indication information, where the first indication information is used to notify the network device that the terminal device is in idle mode.

The network device may be a core network device or an access network device. An access network to which the first cell belongs and an access network to which the second cell belongs may be connected to a same core network. The core network device may be a 5G core network, and the first cell and the second cell are connected to the 5G core network device. For example, the core network device may be an AMF. The first indication information sent in the registration procedure may be the first indication information sent to the AMF. A registration area is allocated to the terminal device, and the first cell and the second cell may be in the registration area.

In this embodiment of this application, the terminal device needs to send, to the network device, status information indicating that the terminal device is currently in idle mode or status information indicating that the terminal device is about to be switched to the idle mode. The registration procedure used for the NAS signaling connection recovery is a procedure in which the terminal device in idle mode can send information to the network device, and a request message in the registration procedure may be used to carry the first indication information. In this embodiment of this application, the terminal device may send the first indication information to the network device by initiating the registration procedure, and the network device may perform status switching based on the first indication information. In this way, the terminal device and the network device synchronously maintain the idle mode. Therefore, an air interface resource waste in a process in which the network device transmits data/signaling to the terminal device is avoided, a downlink data/signaling transmission delay is reduced, and a data loss, a call failure, or the like caused by an excessively long transmission delay is avoided.

In still another possible implementation of the third aspect, the first indication information may be carried in the registration request message. When the registration procedure is initial registration, the registration request message is an initial registration request message. When the registration procedure is a mobility registration update procedure, the registration request message is a mobility registration updating request message. When the registration procedure is a periodic registration update procedure, the registration request message is a periodic registration update request message. Alternatively, the terminal device may send a service request message, where the service request message is used to initiate the service request procedure, and the service request message carries the first indication information. The terminal device in idle mode may send the first indication information to the network device by including the first indication information in the service request message, to notify the network device that the terminal device is in idle mode, or notify the network device to switch the terminal device to the idle mode.

In still another possible implementation of the third aspect, an access stratum of the terminal device is configured to notify a non-access stratum of the terminal device to send the first indication information. The terminal device includes the access stratum and the non-access stratum. The non-access stratum is a function layer between the terminal device and the core network, and the non-access stratum supports transmission of a service message and a signaling message between the core network and the terminal device. The access stratum is a function layer between the access network device and user equipment. Relative to the access stratum, the non-access stratum and a layer above the non-access stratum may be referred to as upper layers (upper layer(s)). Relative to the non-access stratum, the access stratum and a layer below the access stratum may be referred to as lower layers (lower layer(s)).

The access stratum may be configured to receive system information of the second cell, where the system information includes at least one of the following information: identification information of the second cell, identification information of a public land mobile network supported by the second cell, or information about the radio access technology of the second cell. The access stratum perceives, based on the system information, that the radio access technologies of the first cell and the second cell are different. Because the access stratum perceives a radio access technology change, the terminal device may switch to the idle mode. The access stratum may indicate the non-access stratum to send the first indication information. An indication manner may be sending indication information or using a cause value. The access stratum may notify, by using a cause value, the non-access stratum to send the first indication information, where the cause value is used to indicate, to the non-access stratum, a reason why the terminal device switches to the idle mode. The cause value may be that the radio access technologies of the first cell and the second cell are different, or the cause value may indicate that the terminal device performs inter-radio access technology cell re-selection (inter-RAT cell (re-)selection).

In this embodiment of this application, the access stratum perceives, by using the system information, that the current RAT changes, and uses the cause value to indicate the non-access stratum to send the first indication information to notify the network device that the terminal device is in idle mode. The manner of notification by using the cause value is simple and easy to implement. In addition, the non-access stratum does not need to perceive an RAT change, and the non-access stratum only needs to send the first indication information based on a notification of the access stratum.

In still another possible implementation of the third aspect, the access stratum of the terminal device may be configured to receive system information of the second cell, where the system information of the second cell includes information about the second cell. The system information of the second cell includes at least one of the following: identification information of the second cell, identification information of a public land mobile network supported by the second cell, or information about the radio access technology of the second cell. The access stratum of the terminal device may be configured to notify the non-access stratum of the terminal device of the received information about the second cell. The terminal device can perceive the radio access technology change based on the information about the second cell, so that the non-access stratum of the terminal device sends the first indication information based on the information about the second cell that is received by the access stratum of the terminal device. The terminal device may switch to the idle mode. When the terminal device switches to the idle mode, the first indication information is used to notify the network device that the terminal device is in idle mode. Alternatively, the first indication information is used to notify the network device to switch the terminal device to the idle mode.

In this embodiment of this application, the non-access stratum of the terminal device can perceive the RAT change based on the information about the second cell, and can autonomously send the first indication information without an indication of the access stratum.

In still another possible implementation of the third aspect, the network device may be an AMF, and the AMF may perform status synchronization based on the first indication information. The network devices may perform status synchronization in two manners. In one case, when the terminal device is already in idle mode, the network device may perform the following steps for status synchronization:

The AMF deletes terminal context information locally stored by the AMF. The AMF notifies an access network device to release a signaling plane connection and a user plane resource between the access network device and the terminal device. The AMF indicates, to an S-RAN to which the first cell belongs, that the terminal device has entered the idle mode. The S-RAN deletes the context information of the terminal device based on the indication. The AMF notifies, via an SMF, a UPF to release an N3 interface resource.

In another case, when the terminal device is still in connected mode, the network device may perform the following steps for status synchronization:

The AMF deletes terminal context information locally stored by the AMF. The AMF notifies an S-RAN to release a signaling plane connection and a user plane resource. The AMF indicates the terminal device to release a NAS connection. The AMF indicates, to the S-RAN to which the first cell belongs, that the terminal device has entered the idle mode. The S-RAN deletes the context information of the terminal device based on the indication. The S-RAN initiates release of an RRC connection to the terminal device. If an access network device T-RAN to which the second cell belongs stores the context information of the terminal device, the AMF indicates, to the T-RAN, that the terminal device has entered the idle mode. Optionally, the T-RAN deletes the context information of the terminal device based on the indication, and/or the T-RAN initiates release of an RRC connection to the terminal device, and/or the T-RAN initiates release of the user plane resource of the terminal device.

In this embodiment of this application, the network device performs status synchronization based on the first indication information and a current status of the terminal device. In this way, both the terminal device and the network device keep in idle mode, thereby avoiding an air interface resource waste in a signaling transmission process.

A fourth aspect provides a communications apparatus. The communications apparatus may be a terminal device, and includes: a processing module, configured to enable the communications apparatus to re-select from a first cell to a second cell through cell re-selection, where radio access technologies of the first cell and the second cell are different. The radio access technologies of the first cell and the second cell are different. The radio access technology of the first cell may be new radio, and the radio access technology of the second cell may be evolved universal terrestrial radio access. Alternatively, the radio access technology of the first cell may be evolved universal terrestrial radio access, and the radio access technology of the second cell may be new radio. The terminal device is in inactive mode in the first cell, and re-selects to the second cell through cell re-selection. The communications apparatus further includes a transceiver module, configured to send an access stratum message, where the access stratum message is used to request radio resource connection release. The first cell and the second cell may be in a registration area allocated to the terminal device.

In this embodiment of this application, the terminal device in inactive mode performs inter-radio access technology cell re-selection, the terminal device sends a radio resource connection release request message to a network device, and the network device synchronizes a status of the terminal device and a status in the network device to an idle mode based on the received request message. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

In a possible implementation of the fourth aspect, an access stratum may indicate the network device to release a radio resource connection. An indication manner may be a cause value, and the cause value refers to the terminal device requests to release the radio resource connection. In this embodiment of this application, the access stratum of the terminal device may request, by using the cause value, the network device to release the radio resource connection. This indication manner is simple and easy to implement.

In still another possible implementation of the fourth aspect, the transceiver module of the terminal device is configured to send an access stratum message to an access network device to which the first cell belongs, and the access network device to which the first cell belongs releases a radio resource connection based on the access stratum message. The access network device may further indicate a core network device to release an N3 resource connection, so that the terminal device, the access network device, and the core network device are synchronously in idle mode. N3 is an interface between the access network device and a core network device. That the terminal device re-selects to the second cell may mean that the terminal device selects the second cell, but has not yet camped on the second cell, and still camps on the first cell. In this embodiment of this application, the terminal device directly sends the access stratum message to the access network device to which the first cell belongs, and the access network device to which the first cell belongs directly releases the radio resource connection. The core network device does not need to indicate the access network device to release the radio resource connection. The first cell and the second cell may be connected to a 5G core network device.

In still another possible implementation of the fourth aspect, the terminal device camps on the second cell through cell re-selection. In this case, the transceiver module of the terminal device is configured to send an access stratum message to the second cell. In other words, the terminal device sends the access stratum message to an access network device to which the second cell belongs, and the access network device to which the second cell belongs sends a first message to a core network device, where the first message is used to request the core network device to indicate the first cell to release a radio resource connection. The core network device sends radio resource connection release indication information to the first cell based on the received first message, to indicate an access network device to which the first cell belongs to release the radio resource connection. This embodiment of this application provides a more flexible method for indicating the first cell to release the radio resource connection, so that the network device and the terminal device are synchronized in idle mode. Therefore, an air interface resource waste caused when the network device sends data/signaling to the terminal device is avoided, a downlink data/signaling transmission delay is reduced, and a data loss, a call failure, or the like caused by an excessively long transmission delay is avoided.

According to a fifth aspect, a communications apparatus is provided, and includes a transceiver and a processor, where the transceiver is configured to execute instructions for receiving and sending information, and the processor is configured to perform other steps. Specifically, the communications apparatus is configured to perform the method according to any possible implementation of the first aspect.

According to a sixth aspect, a communications apparatus is provided, and includes a transceiver and a processor, where the transceiver is configured to execute instructions for receiving and sending information, and the processor is configured to perform other steps. Specifically, the communications apparatus is configured to perform the method according to any possible implementation of the second aspect.

According to a seventh aspect, a computer-readable storage medium is provided. The computer-readable storage medium stores a computer program. The program is executed by a processor, to implement the method according to any possible implementation of the first aspect.

According to an eighth aspect, a computer-readable storage medium is provided. The computer-readable storage medium stores a computer program. The program is executed by a processor, to implement the method according to any possible implementation of the second aspect.

According to a ninth aspect, a terminal device is provided. The terminal device includes a memory and a processor, the memory is configured to store instructions, the processor is configured to execute the instructions stored in the memory, and execution of the instructions stored in the memory enables the processor to perform the method according to any possible implementation of the first aspect.

According to a tenth aspect, a network device is provided. The network device includes a memory and a processor, the memory is configured to store instructions, the processor is configured to execute the instructions stored in the memory, and execution of the instructions stored in the memory enables the processor to perform the method according to any possible implementation of the second aspect.

According to an eleventh aspect, a communications system is provided, and includes the communications apparatus according to the third aspect.

According to a twelfth aspect, a communications system is provided, and includes the communications apparatus according to the fourth aspect.

According to a thirteenth aspect, a computer program product including instructions is provided. The computer program product is used to store a computer program. When the computer program is run on a computer, the computer is enabled to perform the method according to any possible implementation of the first aspect.

According to a fourteenth aspect, a computer program product including instructions is provided. The computer program product is used to store a computer program. When the computer program is run on a computer, the computer is enabled to perform the method according to any possible implementation of the second aspect.

### BRIEF DESCRIPTION OF DRAWINGS

FIG. 1 is a schematic diagram of a communications system to which a communication method according to an embodiment of this application is applicable;
FIG. 2 is a flowchart of a communication method according to an embodiment of this application;
FIG. 3 is a schematic diagram of a possible application scenario according to an embodiment of this application;
FIG. 4 is a flowchart of another communication method according to an embodiment of this application;
FIG. 5 is a schematic diagram of a communication method according to Embodiment 1 of this application;
FIG. 6 is a flowchart of a communication method according to Embodiment 2 of this application;
FIG. 7 is a flowchart of a communication method according to Embodiment 3 of this application;
FIG. 8 is a flowchart of another communication method according to Embodiment 3 of this application;
FIG. 9 is a schematic structural diagram of a communications apparatus according to an embodiment of this application;
FIG. 10 is another schematic structural diagram of a communications apparatus according to an embodiment of this application; and
FIG. 11 is another schematic structural diagram of a communications apparatus according to an embodiment of this application.

### DESCRIPTION OF EMBODIMENTS

The following describes technical solutions in this application with reference to the accompanying drawings.

To make the objectives, the technical solutions, and advantages of the embodiments of this application clearer, the following further describes the embodiments of this application in detail with reference to the accompanying drawings.

In the following descriptions, some terms in the embodiments of this application are described, to help a person skilled in the art have a better understanding.
1. A terminal device in this application includes a device that provides a voice for a user, a device that provides data connectivity for a user, or a device that provides a voice and data connectivity for a user. For example, the terminal device may include a handheld device having a wireless connection function, or a processing device connected to a wireless modem. The terminal device may also be referred to as a terminal for short. The terminal may communicate with a core network through a radio access network (radio access network, RAN), and exchange a voice or data with the RAN, or exchange a voice and data with the RAN. The terminal may include user equipment (user equipment, UE), a wireless terminal, a mobile terminal, a device-to-device communication (device-to-device, D2D) terminal, a vehicle-to-everything (vehicle to everything, V2X) terminal, a machine-to-machine/machine type communication (machine-to-machine/machine-type communications, M2M/MTC) terminal, an internet of things (internet of things, loT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may include a mobile phone (or referred to as a "cellular" phone), a computer with a mobile terminal, a portable, pocket-sized, handheld, or computer built-in mobile apparatus, or the like. The terminal device may include a device such as a personal communications service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. The terminal device may include an information sensing device, for example, a barcode sensor, radio frequency identification (radio frequency identification, RFID) sensor, a global positioning system (global positioning system, GPS) sensor, or a laser scanner.

As an example instead of a limitation, in the embodiments of this application, the terminal may alternatively be the wearable device. The wearable device may also be referred to as a wearable intelligent device, an intelligent wearable device, or the like, and is a generic term for wearable devices that are developed by applying wearable technologies to intelligently designs of daily wear, such as glasses, gloves, watches, clothes, and shoes. The wearable device is a portable device that can be directly worn on a body or integrated into clothes or an accessory of a user. The wearable device is not only a hardware device, but implements powerful functions through software support, data exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones.

However, if the terminals described above are located in a vehicle, for example, placed in the vehicle or mounted in the vehicle, the terminals may be considered as vehicle-mounted terminals. For example, the vehicle-mounted terminals are also referred to as on-board units (on-board unit, OBU).

In the embodiments of this application, an apparatus configured to implement a function of the terminal may be a terminal, or may be a circuit that can support the terminal in implementing the function, for example, a circuit that may be applied to a chip system. The chip system may be installed in the terminal. In the embodiments of this application, the chip system may include a chip, or may include a chip and another discrete component. In technical solutions provided in the embodiments of this application, an example in which an apparatus for implementing a terminal function is a terminal is used to describe the technical solutions provided in the embodiments of this application.

2. A network device in this application may include a radio access network (radio access network, RAN) device, for example, a base station (for example, an access point). The network device may be a device that communicates with the terminal device through an air interface and that is in an access network, or a network device in a vehicle-to-everything (vehicle-to-everything, V2X) technology is a road side unit (road side unit, RSU). The base station may be configured to mutually convert a received over-the-air frame and an IP packet, and serve as a router between the terminal and a remaining part of the access network. The remaining part of the access network may include an IP network. The RSU may be a fixed infrastructure entity supporting application of the V2X, and may exchange a message with another entity supporting application of the V2X. The network device may further coordinate attribute management of the air interface. For example, the network device may include an evolved NodeB (NodeB, eNB, or e-NodeB, evolutional Node B) in a long term evolution (long term evolution, LTE) system or a long term evolution-advanced (long term evolution-advanced, LTE-A) system, may include a next generation NodeB (next generation node B, gNB) in an evolved packet core (evolved packet core, EPC) network or a 5th generation (5th generation, 5G) new radio (new radio, NR) system (also referred to as an NR system for short), or may include a centralized unit (centralized unit, CU) and a distributed unit (distributed unit, DU) in a cloud access network (cloud radio access network, Cloud RAN) system. This is not limited in the embodiments of this application.

The network device may further include a core network device, and the core network device includes, for example, an access and mobility management function (access and mobility management function, AMF).

### 3. Status of a terminal device

### 3.1. RRC idle mode (RRC_IDLE)

The idle mode is a mode in which the terminal device is in when the terminal device camps on a cell but does not perform a random access procedure. The terminal device usually enters the idle mode after the terminal device is powered on or after RRC connection is released.

### 3.2. RRC connected mode (RRC_CONNECTED)

The connected mode is a mode in which the terminal device is in when the terminal device does not perform RRC release after completing a random access procedure. The terminal device in connected mode may perform data transmission with the network device.

When the terminal device is in idle mode, after the terminal device completes the random access procedure, the terminal device switches to the connected mode.

### 3.3. RRC inactive mode (RRC_INACTIVE)

The inactive mode is a mode other than the connected mode and the idle mode. For the terminal device in inactive mode, a user plane bearer of an air interface has been suspended (suspend), and a user plane bearer and a control plane bearer between a radio access network (radio access network, RAN) and a core network (core network, CN) are still maintained. When the terminal device initiates a call or service request, the user plane bearer of the air interface needs to be activated, and the existing user plane bearer and the existing control plane bearer between the RAN and the CN are reused.

### 4. Cell re-selection (Cell Re-Selection)

Networks are deployed as cells, and each cell has its own coverage area. The terminal device often moves in a use process. If the terminal device moves out of a coverage area of a cell that currently provides a service and enters a new cell, the terminal device needs to re-select to and camp on the new cell to continue to obtain the service. Generally, this process is completed in two manners. The terminal device in idle mode or inactive mode may perform cell re-selection. The terminal device in connected mode may perform handover. This is a manner dominated by a network side, and the terminal device is handed over to a specified cell according to an instruction delivered by a network.

A cell re-selection process may be divided into the following steps:
(1) Cell re-selection measurement
   A current serving cell and neighboring cells (including intra-frequency, inter-frequency, and inter-RAT cells) are measured. Two parameters are considered in neighboring cell measurement: cell priority and signal quality of the cell on which the terminal device currently camps.
(2) Determine whether signal quality of a neighboring cell meets a re-selection criteria. After the measurement is completed, cell quality is determined.
(3) If the signal quality meets the re-selection criteria, re-selection is started and system information of a new cell is received.

After the neighboring cells are measured and it is determined that there is a cell that meets a camping condition, the terminal device attempts to camp on the new cell. If there is no cell that meets a camping condition, the terminal device still stays in the current serving cell.

A process in which the terminal device attempts to camp on the new cell is as follows: The terminal device searches for a target cell, receives a system message of the new cell after finding the target cell, and determines whether the new cell can be camped on normally, for example, performs determining based on the system message of the new cell. After the system message is received, the terminal device camps on the new cell. In this way, the terminal device re-selects to the new cell.

### 5. Paging (Paging)

The network device may notify, through paging, a terminal device in RRC idle mode (RRC_IDLE) or an RRC inactive mode (RRC_INACTIVE) to receive a paging message (paging message), or the network may send, through paging, a short message service (short message) message to a terminal device in RRC idle mode (RRC_IDLE), an RRC inactive mode (RRC_INACTIVE), or an RRC connected mode (RRC_CONNECTED), to indicate system information (System Information, SI) update or an earthquake and tsunami warning/commercial mobile alert (ETWS/CAMS, Earthquake and Tsunami Warning System/Commercial Mobile Alert Service).

### 6. Non-access stratum signaling connection recovery procedure (Non-Access Stratum Signaling Connection Recovery, NAS Signaling Connection Recovery)

ANAS signaling connection (NAS Signaling Connection) is a signaling connection between the terminal device and an access and mobility management function entity (Access And Mobility Management Function, AMF) through an N1 interface, and is used for NAS signaling exchange between the terminal device and a core network.

Two connection management (Connection Management, CM) modes may be used to reflect the NAS signaling connection between the terminal device and the AMF.

### (1) Connection management-idle mode (CM-IDLE)

When the terminal device is in CM-IDLE mode, there is no NAS signaling connection between the terminal device and the AMF.

### (2) Connection management-connected mode (CM-CONNECTED)

When the terminal device is in CM-CONNECTED mode, there is a NAS signaling connection between the terminal device and the AMF through the N1 interface. An RRC connection is maintained between the terminal device and a 5G access network (NG Radio Access Network, NG-RAN), and a connection is maintained between the access network and the AMF, for 3GPP access.

The NAS signaling connection recovery procedure is initiated by a NAS layer and is used to recover a NAS signaling connection when a lower layer indicates an RRC connection failure. The NAS signaling connection recovery procedure may be initiated by initiating the initial registration procedure or the mobility and periodic registration update.

### 7. RAN-based notification area (RAN-based Notification Area, RNA)

The RNA is a concept related to the RRC_INACTIVE mode. The RNA may cover one or more cells, but needs to be within a registration area range configured by the core network. When an RNA timer of the terminal device expires or the terminal device moves out of a range of the RNA, the terminal device needs to initiate an RNA update (RAN-based notification area update, RANU) procedure.

### 8. Radio access technology (Radio Access Technology, RAT)

The radio access technology, also known as an air interface, is a key issue in wireless communication. Based on the radio access technology, a user terminal is connected to a network device by using a wireless medium, to implement information transfer between a user and a network. A signal transmitted on a radio channel should comply with some protocols, and the protocols constitute main content of the radio access technology.

Radio access technologies of a 5G system may include a new radio (New Radio, NR) technology, an evolved universal terrestrial radio access (Evolved Universal Terrestrial Radio Access, E-UTRA) technology, and the like. Common radio access technologies of a 4G system may include a long term evolution (Long Term Evolution, LTE) technology, a terrestrial radio access (Universal Terrestrial Radio Access, UTRA) technology, and the like.

### 9. Access network release procedure (AN Release)

The AN release procedure applies to release of logical (NG-AP) signaling connections and associated N3 user-plane connections, and RAN RRC signaling and resources. The AN release procedure can be initiated by a (R)AN or an AMF.

Case 1: The RAN initiates the procedure, which may include the following steps:
Step 1: If there are some determined RAN conditions, for example, a radio link failure (Radio Link Failure) or another internal RAN cause, the RAN may determine to initiate a terminal device context release in the RAN. In this case, the RAN sends a context release request (N2 UE Context Release Request) message to the AMF. A purpose of a terminal device context release request procedure is to enable an NG-RAN node to request the AMF to release a logical NG connection associated with the terminal device. In this procedure, signaling related to the terminal device is used.
Step 2: The AMF sends context release indication information (N2 UE Context Release Command), to indicate the RAN to release a terminal device context.
Step 3: If an RRC connection between the RAN and the terminal device is not released, the RAN requests the terminal device to release the RAN connection. Once the RAN receives a RAN connection release acknowledgment from the terminal device, the RAN deletes the terminal device context.
Step 4: The RAN returns a release complete (UE Context Release Complete) message to the AMF, where the release complete message carries a related session list.
Step 5: The AMF indicates an SMF to notify a UPF to release an N3 interface resource.

Case 2: The AMF initiates the procedure, which may include the following steps:
Step 1: Because an internal AMF event includes: receiving a service request or a registration request to establish another NAS signaling connection that still passes through the NG-RAN, the AMF sends context release indication information.

After step 1, steps 3 to 5 in the procedure initiated by the RAN continue to be performed.

10. The technical solutions in the embodiments of this application may be applied to various communications systems, for example, a 5th generation (5th Generation, 5G) system such as NR, and a future communications system such as a 6G system.

This application presents all aspects, embodiments, or features by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of a new service scenario, the technical solutions provided in the embodiments of this application are also applicable to similar technical problems.

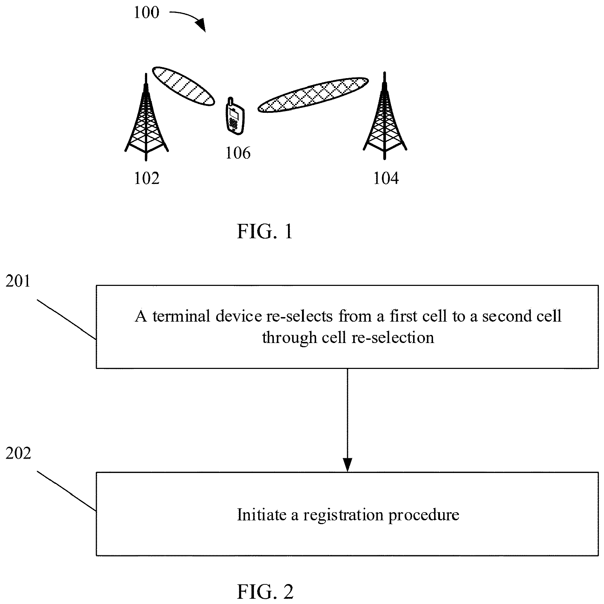

For ease of understanding of the embodiments of this application, a communications system shown in FIG. 1 is first used as an example to describe in detail a communications system to which the embodiments of this application are applicable. FIG. 1 is a schematic diagram of a communications system to which a communication method according to an embodiment of this application is applicable. As shown in FIG. 1, the communications system 100 includes a network device 102 and a terminal device 106. A plurality of antennas may be configured for the network device 102, and a plurality of antennas may also be configured for the terminal device. Optionally, the communications system may further include a network device 104, and a plurality of antennas may also be configured for the network device 104. FIG. 1 is merely a simplified schematic diagram of an example for ease of understanding. The communications system may further include another network device or another terminal device that is not shown in FIG. 1.

The network device 102 or the network device 104 may further include a plurality of components related to signal sending and receiving, for example, a processor, a modulator, a multiplexer, a demodulator, or a demultiplexer.

In the communications system 100, the network device 102 and the network device 104 each may communicate with a plurality of terminal devices, for example, the terminal device 106 shown in the figure. However, it should be understood that a terminal device communicating with the network device 102 and a terminal device communicating with the network device 104 may be the same or may be different. The terminal device 106 shown in FIG. 1 may communicate with both the network device 102 and the network device 104. However, only one possible scenario is shown. In some scenarios, the terminal device may communicate with only the network device 102 or the network device 104. This is not limited in this application.

The following describes in detail the embodiments of this application with reference to the accompanying drawings.

A registration procedure in the embodiments of this application is first described. A terminal device needs to be registered with a network based on the registration procedure, so that the terminal device can be authorized to obtain a related service, including mobility tracking and reachability. The registration procedure is a general term for initial registration and mobility and periodic registration update, and the registration procedure is used for NAS signaling connection recovery.

### 1. Initial registration (Initial Registration)

The initial registration is the first time of registration initiated by the terminal device, and an initial registration procedure may be used by the terminal device to perform initial registration of a 5G system (5G system, 5GS) service. When the terminal device initiates initial registration, the terminal device may indicate "initial registration" in an information element (Information Element, IE) of a 5G registration type. The terminal device may initiate the initial registration procedure by sending a registration request message to an AMF. The initial registration procedure may be initiated due to the following reasons:
(a) When needing to perform a 5GS service, the terminal device performs initial registration.
(b) When needing to perform an emergency service, the terminal device performs initial registration.
(c) When needing to perform a NAS-based SMS service, the terminal device performs initial registration.

### 2. Mobility and periodic registration update (Registration Procedure for Mobility and Periodic Registration Update)

This procedure is used by the terminal device to perform mobility and periodic registration update for a 5GS service. When used to perform mobility and periodic registration update for a 5GS service, this procedure is performed only for 3GPP access.

The terminal device may initiate the mobility and periodic registration update procedure by sending a registration request message to an AMF. The mobility and periodic registration update procedure may be divided into a mobility registration update procedure and a periodic registration update procedure.

The mobility registration update occurs when the terminal device moves from one place to another place and a tracking area (Tracking Area, TA) changes. A result of the mobility registration update is to update the TA and a related parameter.

For the periodic registration update, after the terminal device is connected to a network, the network needs to determine whether the user still exists, and initiates a registration request at an interval by using a periodic timer.

There are also a plurality of reasons for initiating the mobility and periodic registration update, for example, when the terminal device detects that the terminal device enters a tracking area and the tracking area is not in a tracking area list previously registered by the terminal device with the AMF, or when a periodic registration update timer expires in a 5GMM-IDLE mode.

An embodiment of this application provides a new method for initiating a registration procedure. FIG. 2 is a flowchart of a communication method according to an embodiment of this application. Referring to FIG. 2, the method includes the following steps.

201: A terminal device selects or re-selects from a first cell to a second cell through cell selection or re-selection, where radio access technologies of the first cell and the second cell are different, and the terminal device is in inactive mode in the first cell.

202: The terminal device initiates a registration procedure.

In step 201, the terminal device is in inactive mode in the first cell. The inactive mode herein may be a radio resource control inactive mode. The inactive mode is a mode in which the terminal device still remains in CM-CONNECTED mode, and the terminal device may move in an RNA area without notifying an NG-RAN. When the terminal device is in inactive mode, the last serving access network retains a context of the terminal device, and retains a connection between the serving access network and a serving AMF and a connection between the serving access network and a user plane function (User Plane Function, UPF), where the connections are associated with the terminal device. From a perspective of a core network, that the terminal device is in connected mode. When the terminal device is in RRC_INACTIVE mode, if the last serving access network receives downlink data from the UPF or downlink signaling from the AMF, the access network pages the terminal device in all cells in the RNA. If a cell in the RNA belongs to a neighboring access network, the access network sends a paging message to a corresponding neighboring access network node through an Xn interface. Herein, the inactive mode may be an RRC inactive mode, or the inactive mode may be referred to as a 5G system mobility management connected mode with RRC inactive indication (5GS Mobility Management Connected Mode with RRC inactive indication).

In this embodiment of this application, the RATs for the first cell and the second cell may be different. For example, the RAT for the first cell may be NR, and the RAT for the second cell may be E-UTRA. Alternatively, the RAT for the first cell may be E-UTRA, and the RAT for the second cell may be NR. Alternatively, the RAT for the first cell may be E-UTRA, and the RAT for the second cell may be LTE. Alternatively, the RAT for the first cell may be NR, and the RAT for the second cell may be UTRA. Alternatively, the RAT for the first cell may be UTRA, and the RAT for the second cell may be NR. Alternatively, the first cell may use a 5G RAT, and the second cell may use a 4G RAT. It should be noted that these are merely examples.

In this embodiment of this application, that a terminal device (re-)selects from a first cell to a second cell through cell (re-)selection may mean: The terminal device selects the second cell as a new cell after performing cell measurement in the first cell, but the terminal device has not camped on the new cell. Alternatively, after selecting the second cell as a new cell, the terminal device receives system information of the second cell, and determines that the second cell can be normally camped on. Alternatively, after determining that the second cell can be normally camped on, the terminal device camps on the second cell. All the foregoing three cases may be understood as that the terminal device re-selects from the first cell to the second cell through cell re-selection.

In step 201, the terminal device may select or re-select from the first cell to the second cell. Because the RATs for the first cell and the second cell are different, the cell re-selection in this case may also be referred to as inter-RAT cell re-selection (inter-RAT cell re-selection) or inter-RAT cell selection (inter-RAT cell selection). In other words, inter-RAT mobility occurs on the UE.

In this embodiment of this application, when the terminal device in inactive mode performs inter-RAT cell (re-)selection, the terminal device further performs step 202.

In step 202, the terminal device initiates the registration procedure or a service request procedure (service request procedure), for NAS signaling connection recovery. The registration procedure includes initial registration, mobility registration update, or periodic registration update.

This embodiment of this application provides a new condition for initiating the registration procedure. When the terminal device in inactive mode performs inter-RAT cell (re-)selection), the terminal device initiates the registration procedure, for the NAS signaling connection recovery, so that a network device updates information based on different RATs.

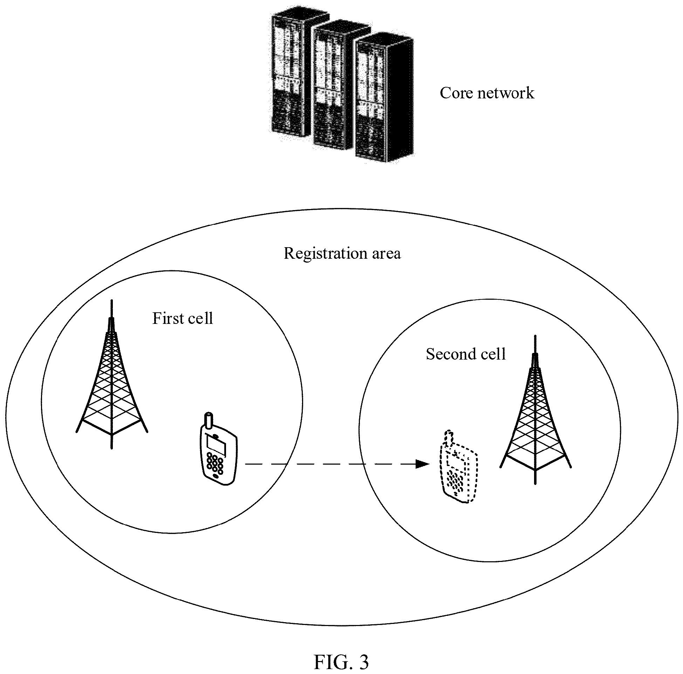

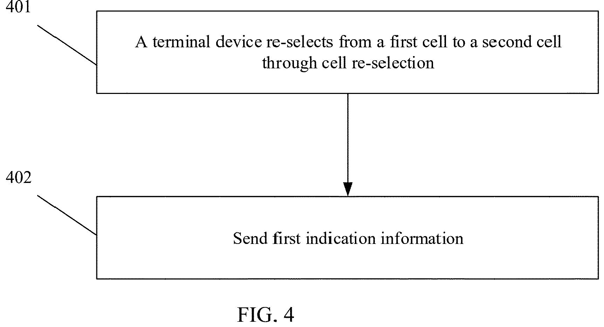

FIG. 3 is a schematic diagram of an optional application scenario according to an embodiment of this application. FIG. 4 is a flowchart of another communication method according to an embodiment of this application. With reference to the optional application scenario shown in FIG. 3, the another communication method provided in this embodiment of this application is described. The method includes the following steps.

401: A terminal device (re-)selects from a first cell to a second cell through (re-)selection, where radio access technologies of the first cell and the second cell are different, and the terminal device is in inactive mode in the first cell.

Meanings of the inactive mode and the cell re-selection in step 401 are the same as those in step 201, and details are not described herein again. The following describes step 401 with reference to the application scenario in FIG. 3.

To communicate with a network device, the terminal device needs to be registered with the network device. When the terminal device is registered with the network device, the network device allocates a registration area (registration area, RA) to the terminal device. The registration area may also be referred to as a tracking area ID list (Tracking Area ID list, TAI list). When the terminal device is about to leave the RA, the terminal device initiates a mobile registration procedure, to notify the network device of current location information of the terminal device. The network device allocates a new RA to the terminal device. When the network has downlink data or signaling that needs to be sent to the terminal device, the network pages the terminal device in an RA range. When allocating the RA to the terminal device, the network device does not consider a difference between RATs. In other words, there may be a plurality of RATs in one RA.

As shown in FIG. 3, a range of an RA allocated to the terminal device shown in FIG. 3 includes the first cell and the second cell, and the RATs for the first cell and the second cell are different. For example, the RAT for the first cell may be NR, and the RAT for the second cell may be E-UTRA. Alternatively, the RAT for the first cell may be E-UTRA, and the RAT for the second cell may be NR. Alternatively, the RAT for the first cell may be E-UTRA, and the RAT for the second cell may be LTE. Alternatively, the RAT for the first cell may be NR, and the RAT for the second cell may be UTRA. Alternatively, the RAT for the first cell may be UTRA, and the RAT for the second cell may be NR. It should be noted that these are merely examples.

An access network to which the first cell belongs may be referred to as a source access network device (Source Radio Access Network, S-RAN), and an access network to which the second cell belongs may be referred to as a target access network device (Target Radio Access Network, T-RAN). In FIG. 3, the S-RAN and the T-RAN may be connected to a same core network, or it may be referred to as that the first cell and the second cell are connected to a same core network device. For example, the S-RAN and the T-RAN are connected to a same AMF.

In the embodiments of this application, the core network device and the access network device may be collectively referred to as a network device. Herein, the core network device is merely described by using the AMF as an example. The core network device in the embodiments of this application may be a 5G core network device. The core network device includes but is not limited to an AMF, a user plane function (User plane Function, UPF), an authentication service function (Authentication Server Function, AUSF), a data network (Data Network, DN), an unstructured data storage function (Unstructured Data Storage Function, UDFS), a network exposure function (Network Exposure Function, NEF), a network function repository function (NF Repository Function, NRF), a network slice selection function (Network Slice Selection Function, NSSF), a policy control function (Policy Control function, PCF), a process management function (Session Management Function, SMF), a unified data management function (Unified Data Management, UDM), a unified data repository function (Unified Data Repository, UDR), or an application function (Application Function, AF).

The technical solution in this embodiment of this application may apply to a 5th generation, a 6th generation, and a future mobile communications system. When the technical solution in this embodiment of this application applies to the sixth generation and the future mobile communications system, correspondingly, the network device and the terminal device may be devices that apply to the sixth generation and the future mobile communications system.

The terminal device is in inactive mode in the first cell. If the terminal device selects or re-selects to the second cell through the inter-RAT cell (re-)selection, the terminal device switches to an idle mode. Herein, the idle mode may be an RRC idle mode, or the idle mode may be referred to as a 5G system mobility management idle mode (5GS Mobility Management Idle Mode, 5GMM-Idle mode).

402: The terminal device initiates a registration procedure, where initiating the registration procedure includes that the terminal device sends first indication information, where the first indication information is used to notify the network device that the terminal device is in idle mode, or notify the network device to switch the terminal device to the idle mode.

In step 402, when the terminal device in inactive mode re-selects to the second cell with a different RAT, the terminal device switches to the idle mode. In this case, the terminal device may send the first indication information to the network device in the registration procedure, where the first indication information is used to notify the network device that the terminal device is already in idle mode, or notify the network device to switch the terminal device to the idle mode.

In step 402, the registration procedure is used for NAS signaling connection recovery. The registration procedure includes initial registration, mobility registration update, or periodic registration update. When the terminal device performs inter-RAT cell (re-)selection, the terminal device switches to the idle mode. In this embodiment of this application, the terminal device may send, to the network device, status information indicating that the terminal device is currently in idle mode or status information indicating that the terminal device is about to be switched to the idle mode. The registration procedure used for the NAS signaling connection recovery is a procedure in which the terminal device in idle mode can send information to the network device, and a request message in the registration procedure may be used to carry the first indication information. In this embodiment of this application, the terminal device may send the first indication information to the network device by initiating the registration procedure, and the network device may perform status switching based on the first indication information. In this way, the terminal device and the network device synchronously maintain the idle mode. Therefore, an air interface resource waste in a process in which the network device transmits data/signaling to the terminal device is avoided, a downlink data/signaling transmission delay is reduced, and a data loss, a call failure, or the like caused by an excessively long transmission delay is avoided.

The following describes how to avoid an air interface resource waste in a data/signaling transmission process in the embodiments of this application:
When the terminal device switches to or needs to switch to the idle mode, if the network device cannot synchronously update a status, status information of the terminal device is inconsistent with status information in the network device. In this case, a procedure in which the network device transmits the downlink data/signaling to the terminal device is as follows: The AMF sends the data/signaling to an access network device, and the access network device performs RAN paging (Radio Access Network Paging, RAN Paging) in a range of an RNA. Because the status information of the terminal device is inconsistent with the status information in the network device, the RAN paging fails. The access network device reports a paging failure result to the AMF, and the AMF further performs core network paging (Core Net Paging, CN Paging) in the range of the registration area. When the CN paging succeeds, the AMF sends the data to the terminal device. If the status information of the terminal device is inconsistent with that in the network device, it takes a long time to transmit downlink data/signaling to the terminal device, and paging signaling and an air interface resource are wasted.

If the AMF can learn in time that a connection status of the terminal device changes, when the AMF transmits downlink data/signaling to the terminal device, the AMF may directly perform CN paging in the range of the registration area. When the CN paging succeeds, the AMF sends the data to the terminal device.

In this embodiment of this application, when the terminal device performs inter-RAT cell (re-)selection, the terminal device switches to the idle mode. The first indication information sent by the terminal device to the network device in the registration procedure is used to indicate that the connection status is to change or has been changed. The network device may perform status switching based on the first indication information. In this way, the terminal device and the network device synchronously maintain the idle mode. Therefore, an air interface resource waste in a process in which the network device transmits data/signaling to the terminal device is avoided, a downlink data/signaling transmission delay is reduced, and a data loss, a call failure, or the like caused by an excessively long transmission delay is avoided.

In this embodiment of this application, as an optional implementation, a service request procedure (Service Request Procedures) may be used to replace the registration procedure. The service request procedure may also be used for NAS signaling connection recovery. A service request message may be sent in the service request procedure, and the first indication information may be carried in the service request message. In this embodiment of this application, only the registration procedure may be replaced with the service request procedure, and other steps are the same and applicable.

FIG. 2 to FIG. 4 are general descriptions of the technical solutions provided in the embodiments of this application. The following describes in detail the technical solutions in the embodiments of this application with reference to Embodiment 1 to Embodiment 3. Embodiment 1 to Embodiment 3 are based on ideas of the technical solutions in FIG. 2 to FIG. 4. Content described in FIG. 2 to FIG. 4 is applicable to Embodiment 1 to Embodiment 3 of this application.

### Embodiment 1

In Embodiment 1 of this application, a terminal device is in inactive mode in a first cell, and selects or re-selects from the first cell to a second cell through cell selection or re-selection. An access stratum (Access Stratum, AS) of the terminal device receives system information of the second cell, where the system information of the second cell includes RAT information of the second cell. The AS layer reports the system information to a non-access stratum (Non-Access Stratum, NAS) of the terminal device. In this case, the terminal device learns, by using the system information of the second cell, that inter-RAT cell (re-)selection occurs, that is, RATs for the first cell and the second cell are different. The terminal device performs a registration procedure, and in the registration procedure, notifies a network device that a status of the terminal device is switched to an idle mode, or notifies a network device to switch a status of the terminal device to an idle mode.

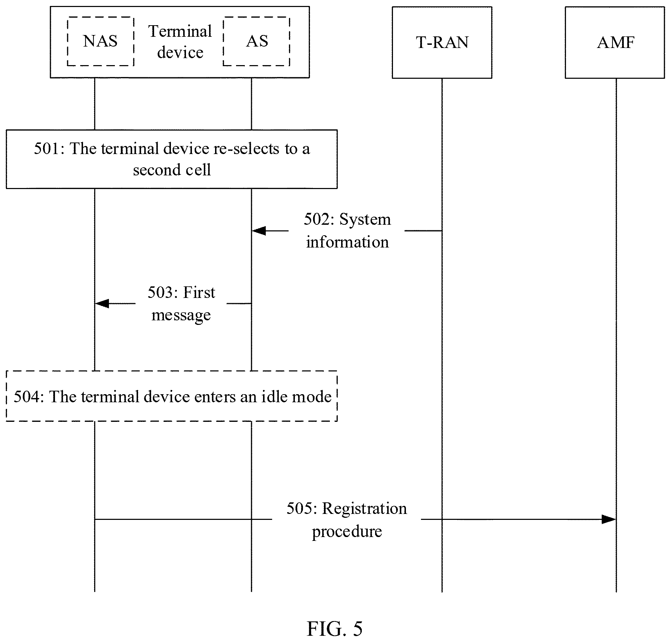

FIG. 5 is a schematic diagram of a communication method according to Embodiment 1 of this application. In FIG. 5, a terminal device includes an AS layer and a NAS layer, a T-RAN is an access network device to which a second cell belongs, and an AMF is a core network device connected to access network devices of a first cell and the second cell. As shown in FIG. 5, the method includes the following steps.

501: The terminal device selects or re-selects from the first cell to the second cell through cell selection or re-selection, where RATs for the first cell and the second cell are different, and the terminal device is in inactive mode in the first cell.

Step 501 is the same as step 201 or step 401, and details are not described herein again.

502: The terminal device receives system information of the second cell.

The terminal device receives the system information of the second cell. The terminal device may receive the system information before camping on the second cell, or may receive the system information after camping on the second cell. The system information of the second cell may include identification information of the second cell, identification information of a public land mobile network supported by the second cell, or information about the radio access technology of the second cell.

In step 502, the system information may be received by the AS layer of the terminal device, and the AS layer is a function layer between the access network device and user equipment. The AS layer is responsible for transmitting data and managing radio resources on a wireless connection. The AS layer of the terminal device may include a physical layer (Physical Layer, PHY), a media access control (Media Access Control, MAC) layer, a radio link control (Radio Link Control, RLC) layer, a packet data convergence protocol (Packet Data Convergence Protocol, PDCP) layer, a radio resource control (Radio Resource Control, RRC) layer, and the like.

A structure other than the AS layer may be referred to as the NAS layer, and the NAS layer is a function layer between the terminal device and a core network. The NAS supports transmission of a service message and a signaling message between the core network and the terminal device.

For example, relative to the AS layer, the NAS layer and a layer above the NAS layer may be referred to as upper layers (upper layers). Relative to the NAS layer, the AS layer and a layer below the AS layer may be referred to as lower layers (lower layers).

503: The NAS layer of the terminal device sends first indication information based on information about the second cell that is received by the AS layer.

The AS layer receives the related information about the second cell by using the system information of the second cell, where the information about the second cell includes RAT information of the second cell. The AS layer notifies the NAS layer of the information about the second cell. The NAS layer perceives an RAT changes based on the information about the second cell. In this case, the NAS layer also knows that the terminal device is still in inactive mode and is located in a registration area.

504: The terminal device switches to an idle mode.

Step 504 is an optional step in Embodiment 1 of this application. The NAS layer perceives the RAT changes based on the information about the second cell, and the terminal device is to enter the idle mode according to a protocol specification. The terminal device may switch to the idle mode, or may notify, in a subsequent step, the network device to switch the terminal device to the idle mode.

In step 504, the terminal device may delete internal context information of the terminal device, to switch from a connected mode to the idle mode.

505: The terminal device initiates a registration procedure or a service request procedure.

In step 505, the terminal device may send a registration request message, where the registration request message is used to initiate the registration procedure. When the registration procedure is initial registration, the registration request message is an initial registration request message. When the registration procedure is a mobility registration update procedure, the registration request message is a mobility registration updating request message. When the registration procedure is a periodic registration update procedure, the registration request message is a periodic registration update request message. Alternatively, the terminal device may send a service request message, where the service request message is used to initiate the service request procedure.

The registration request message or the service request message includes the first indication information. When the terminal device performs step 504, the first indication information sent by the terminal device is used to notify the network device that the terminal device is in idle mode. When the terminal device does not perform step 504, the first indication information is used to notify the network device to switch the terminal device to the idle mode.

Depending on whether the terminal device performs 504, processes in which the terminal device initiates the registration procedure are slightly different. The following separately describes the processes.

Case 1: The terminal device performs 504, and the terminal device switches to the idle mode, to initiate the registration procedure.

The terminal device performs inter-RAT cell re-selection in inactive mode. If the terminal device only selects the second cell, but does not move to or camp on the second cell, the terminal device switches to the idle mode in the first cell, initiates the registration procedure in the first cell, and sends the first indication information to the network device by using the registration request message in the registration procedure. In this case, the terminal device is in idle mode.

Alternatively, the terminal device in inactive mode may select and move to the second cell, and switch to the idle mode. Then, the terminal device may initiate the registration procedure in the second cell, and send the first indication information to the network device by using the registration request message in the registration procedure. In this case, the terminal device is in idle mode.

For example, the NAS layer of the terminal device initiates the registration procedure, and sends the first indication information to the AMF, to notify the AMF that the terminal device is in idle mode. The AMF may initiate AN release to keep a status in the networkconsistent with the statusof the terminal device, so that both the status in the network status and the status of the terminal device are switched to the idle mode. A process in which the AMF performs status synchronization based on the first indication information may be as follows:

The AMF deletes terminal context information locally stored by the AMF.

The AMF notifies an S-RAN to release a signaling plane connection and/or a user plane resource. The AMF indicates, to the access network device S-RAN to which the first cell belongs, that the terminal device has entered the idle mode.

The S-RAN deletes the context information of the terminal device based on the indication.

The S-RAN initiates release of an RRC connection to the terminal device.

The AMF indicates, to the access network device T-RAN to which the second cell belongs, that the terminal device has entered the idle mode.

The T-RAN deletes the context information of the terminal device based on the indication.

The T-RAN initiates release of an RRC connection to the terminal device. The AMF notifies, by using a session management function (Session Management Function, SMF), a UPF to release an N3 interface resource. N3 is an interface between the access network device and a core network device.

It should be noted that a status synchronization process is not limited to the foregoing steps, and the AMF may alternatively perform another action to enable the network device and the terminal device to be synchronized in idle mode. The foregoing steps are merely examples for description, and it is not required to perform each listed step.

Case 2: The terminal device does not perform step 504. After completing cell re-selection, the terminal device is still in inactive mode, and further initiates the registration procedure.

In the case 2, the terminal device performs inter-RAT cell re-selection in the inactive mode. Similar to that in the case 1, alternatively, the terminal device may only select the second cell, but does not move to or camp on the second cell. In this case, the terminal device is still in inactive mode, initiates the registration procedure in the first cell, and sends, in the registration procedure by using the registration request message, the first indication information to notify the network device to switch the terminal device to the idle mode.

Alternatively, the terminal device may select and move to the second cell. In this case, the terminal device is still in inactive mode, initiates the registration procedure in the second cell, and sends, in the registration procedure by using the registration request message, the first indication information to notify the network device to switch the terminal device to the idle mode.

Alternatively, the terminal device moves to and camps on the second cell. In this case, the terminal device is in connected mode, and initiates the registration procedure in connected mode. In the registration procedure, the first indication information is sent by using the registration request message, to notify the network device to switch the terminal device to the idle mode.

For example, the NAS layer of the terminal device initiates the registration procedure, and sends the first indication information to the AMF, to notify the AMF to switch the terminal device to the idle mode. That the network device switches the terminal device to the idle mode may mean: The AMF switches the terminal device to the idle mode by initiating AN release, and the network device also switches to the idle mode, so that a status in the network is consistent with that of the terminal device. A process in which the AMF performs status synchronization based on the first indication information may be as follows:
The AMF deletes terminal context information locally stored by the AMF.

The AMF notifies an S-RAN to release a signaling plane connection and/or a user plane resource.

The AMF indicates the terminal device to release a NAS connection.

The AMF indicates, to the access network device S-RAN to which the first cell belongs, that the terminal device has entered the idle mode.

The S-RAN deletes the context information of the terminal device based on the indication.

The S-RAN initiates release of an RRC connection to the terminal device.

The AMF indicates, to the access network device T-RAN to which the second cell belongs, that the terminal device has entered the idle mode.

The T-RAN deletes the context information of the terminal device based on the indication.

The T-RAN initiates release of an RRC connection to the terminal device.

The T-RAN releases a signaling plane connection and/or a user plane resource.

The AMF notifies, by using a session management function (Session Management Function, SMF), a UPF to release an N3 interface resource. N3 is an interface between the access network device and a core network device.

It should be noted that a status synchronization process is not limited to the foregoing steps, and the AMF may alternatively perform another action to enable the network device and the terminal device to be synchronized in idle mode. The foregoing steps are merely examples for description, and it is not required to perform each listed step.

In step 505, the terminal device initiates the registration procedure for NAS signaling connection recovery. NAS signaling is signaling transmitted between the terminal device and the core network. The terminal device sends the first indication information to the core network in the registration procedure. The core network performs status synchronization based on the first indication information.

The AMF may also perform another action to enable the network device and the terminal device to be synchronized in idle mode. This is not limited in this embodiment of this application.

In Embodiment 1 of this application, the terminal device performs inter-RAT cell (re-)selection in inactive mode, and the AS layer learns of the RAT change by using the system information of the second cell, and reports the RAT change to the NAS layer. The NAS layer initiates the registration procedure, to notify the network device that the terminal device is already in idle mode, or notify the network device to switch the terminal device to the idle mode. In Embodiment 2, a NAS layer perceives an RAT change by using information about a second cell, and notifies a network device by initiating a registration procedure. Therefore, the network device and a terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

### Embodiment 2

In Embodiment 2 of this application, a terminal device is in inactive mode in a first cell, and selects or re-selects from the first cell to a second cell through cell selection or re-selection. A difference from Embodiment 1 lies in that, in Embodiment 2, the terminal device switches to an idle mode when completing the cell selection or re-selection process. An AS layer of the terminal device indicates a NAS layer to send first indication information, where the first message carries a cause value, and the cause value refers to radio access technologies of the first cell and the second cell are different. The NAS layer initiates a registration procedure in response to the cause value.

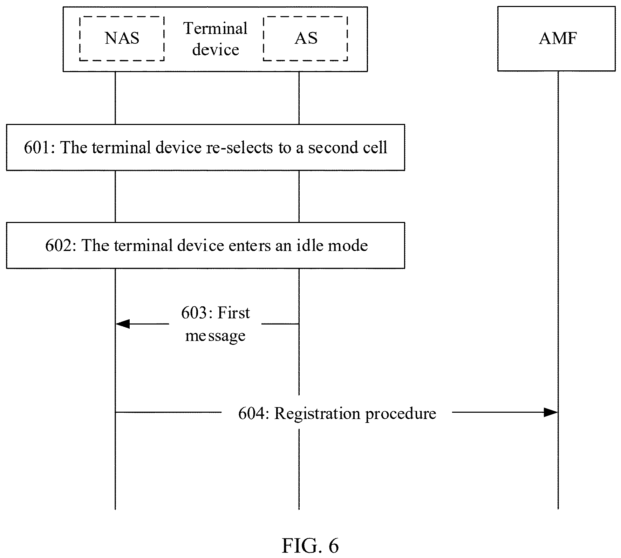

FIG. 6 is a flowchart of a communication method according to Embodiment 2 of this application. FIG. 6 shows an example in which a terminal device includes an AS layer and a NAS layer and a core network AMF is used as a network device. The method includes the following steps.

601: The terminal device selects or re-selects from the first cell to the second cell through cell re-selection, where RATs for the first cell and the second cell are different, and the terminal device is in inactive mode in the first cell.

Step 601 is the same as step 201 or step 401, and details are not described herein again.

602: The terminal device switches from the inactive mode to an idle mode (RRC-Idle).

The terminal device is in inactive mode in the first cell, and performs inter-RAT cell (re-)selection. The terminal device selects or re-selects from the first cell to the second cell. The terminal device may delete internal context information of the terminal device, to switch from a connected mode to the idle mode. In Embodiment 2, the terminal device switches to the idle mode when completing the cell re-selection.

In Embodiment 2 of this application, before step 602, the method may further include: The AS layer of the terminal device receives system information of the second cell, where the system information of the second cell includes information about the second cell. The information about the second cell includes at least one of the following: identification information of the second cell, identification information of a public land mobile network supported by the second cell, or information about the radio access technology of the second cell. Different from that in Embodiment 1, the AS layer of the terminal device perceives an RAT change based on the information about the second cell. The terminal device switches from the inactive mode to the idle mode.

603: The AS layer of the terminal device indicates or notifies (indicate or notify), the NAS layer to send first indication information. Optionally, the AS layer of the terminal device notifies, by using a cause value, the NAS layer to send the first indication information, where the cause value refers to the radio access technologies of the first cell and the second cell are different.

In step 603, when the terminal device switches to the idle mode, the AS layer of the terminal device indicates the NAS layer to send the first indication information. The terminal device may indicate, by using the cause value, the NAS layer to send the first indication information. The cause value refers to the RATs for the first cell and the second cell are different, or the cause value may indicate that the terminal device performs inter-RAT cell (re-)selection. That the terminal device performs inter-RAT cell (re-)selection and that RATs for the first cell and the second cell are different have a same meaning, and both are used to indicate that the terminal device selects or re-selects to a cell with a different RAT.

The AS layer of the terminal device notifies, by using the cause value, the NAS that the current connection status changes due to the RAT change. The NAS of the terminal device sends the first indication information in response to the cause value.

604: The terminal device initiates a registration procedure or a service request procedure.

The NAS layer of the terminal device can learn, based on a notification from the AS layer, that the terminal device is already in idle mode, and a reason why the terminal device switches to the idle mode is that the terminal device performs inter-RAT cell (re-)selection. The terminal device initiates the registration procedure in response to the cause value. The terminal device sends a registration request message in the registration procedure, where the registration request message includes the first indication information. The first indication information is used to notify the network device that the terminal device is in idle mode. Alternatively, the terminal device initiates the service request procedure, and sends a service request message in the service request procedure, where the service request message includes the first indication information.

Similar to that in Embodiment 1, the terminal device may initiate the registration procedure in the first cell, or may initiate the registration procedure after moving to the second cell.

The network device in step 604 may be an AMF, and the AMF performs status synchronization based on the first indication information. The AMF may initiate AN release to keep a status in the network consistent with the status of the terminal device, so that both the status in the network status and the status of the terminal device are switched to the idle mode.

A process in which the AMF performs status synchronization based on the first indication information may be as follows:
The AMF deletes terminal context information locally stored by the AMF.

The AMF notifies an S-RAN to release a signaling plane connection and/or a user plane resource between the S-RAN and the terminal device.

The AMF indicates, to the S-RAN to which the first cell belongs, that the terminal device has entered the idle mode. The S-RAN deletes the context information of the terminal device based on the indication.

The AMF notifies, by using a session management function (Session Management Function, SMF), a UPF to release an N3 interface resource. N3 is an interface between the access network device and a core network device.

It should be noted that a status synchronization process is not limited to the foregoing steps, and the AMF may alternatively perform another action to enable the network device and the terminal device to be synchronized in idle mode. The foregoing steps are merely examples for description, and it is not required to perform each listed step.

In Embodiment 2 of this application, the terminal device switches to the idle mode by re-selecting to the second cell through cell re-selection. The AS layer sends, to the NAS layer, the cause value to indicate a reason why the terminal device changes to the idle mode, and the NAS layer sends the first indication information in response to the cause value, where the first indication information is used to notify the network device that the terminal device is in idle mode. In Embodiment 2, the NAS layer initiates the registration procedure based on the cause value from the AS layer, and notifies the network device that the current status of the terminal device has been switched. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

### Embodiment 3

Embodiment 3 of this application is also applicable to the application scenario in FIG. 3. Embodiment 3 is different from Embodiment 1 and Embodiment 2 in that: A terminal device that is in inactive mode in a first cell performs cell selection or re-selection from the first cell to a second cell, and the terminal device requests RRC connection release (for example, RRC connection release or RRC release) by using an AS layer message.

Embodiment 3 of this application provides two manners of requesting, by the terminal device, the RRC (connection) release by using the AS layer message.

Manner 1: The terminal device re-selects to the second cell, but does not camp on the second cell. In this case, the terminal device still maintains a connection to the first cell. The terminal device sends, by using an AS layer, an AS message to an S-RAN to which the first cell belongs, where the AS message is used to request radio resource connection release (RRC connection release or RRC release) from the S-RAN.

Manner 2: The terminal device re-selects to the second cell, and camps on the second cell. In this case, the terminal device still maintains a connection to the second cell. The terminal device sends, by using an AS layer, an AS message to a T-RAN to which the second cell belongs, and the T-RAN indicates, by using an AMF, an S-RAN of the first cell to perform radio resource connection release.

The following separately describes the two manners.

### Manner 1:

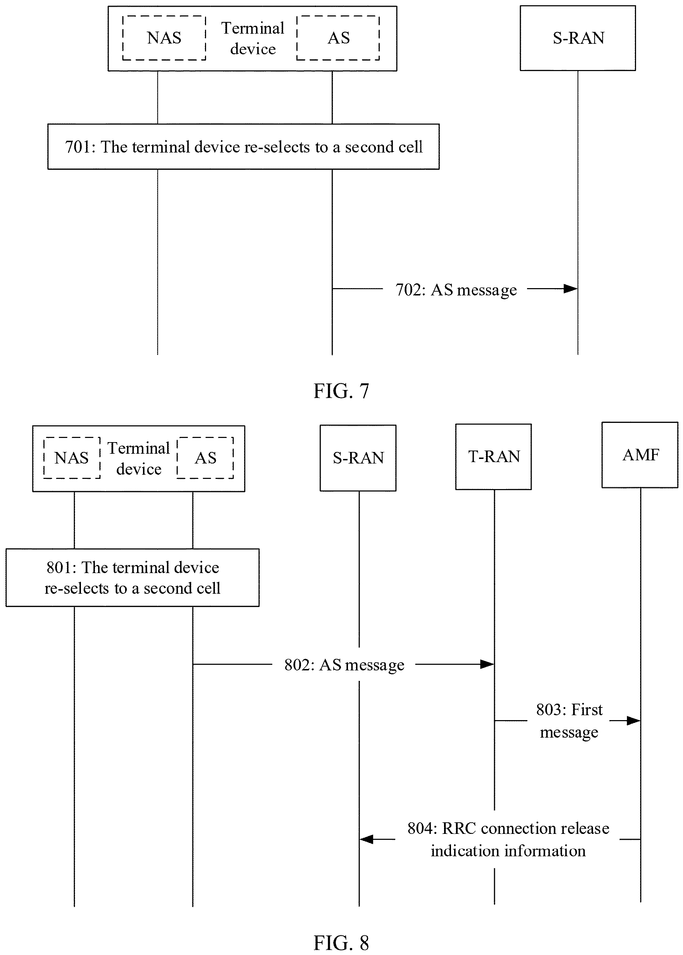

FIG. 7 is a flowchart of a communication method according to Embodiment 3 of this application. As shown in FIG. 7, the method includes the following steps.

701: The terminal device re-selects from the first cell to the second cell through cell re-selection, where RATs for the first cell and the second cell are different, and the terminal device is in inactive mode in the first cell.

The terminal device is in inactive mode in the first cell. The inactive mode herein may be a radio resource control inactive mode. The inactive mode is a state in which the terminal device still remains in CM-CONNECTED mode, and the terminal device may move in an RNA area without notifying an NG-RAN. When the terminal device is in inactive mode, the last serving access network retains a context of the terminal device, and retains a connection between the serving access network and a serving AMF and a connection between the serving access network and a user plane function (User Plane Function, UPF), where the connections are associated with the terminal device. From a perspective of a core network, that the terminal device is in inactive mode is the same as the terminal device is in connected mode. When the terminal device is in RRC_INACTIVE mode, if the last serving access network receives downlink data from the UPF or downlink signaling from the AMF, the access network pages the terminal device in all cells in the RNA. If a cell in the RNA belongs to a neighboring access network, the access network sends a paging message to a corresponding neighboring access network node through an Xn interface.

In Embodiment 3 of this application, the RATs for the first cell and the second cell may be different. For example, the RAT for the first cell may be NR, and the RAT for the second cell may be E-UTRA. Alternatively, the RAT for the first cell may be E-UTRA, and the RAT for the second cell may be NR. Alternatively, the RAT for the first cell may be E-UTRA, and the RAT for the second cell may be LTE. Alternatively, the RAT for the first cell may be NR, and the RAT for the second cell may be UTRA. Alternatively, the RAT for the first cell may be UTRA, and the RAT for the second cell may be NR. It should be noted that these are merely examples.

In Embodiment 3 of this application, that a terminal device re-selects from a first cell to a second cell through cell re-selection may mean: The terminal device selects the second cell as a new cell after performing cell measurement in the first cell. Alternatively, after selecting the second cell as a new cell, the terminal device receives system information of the second cell, and determines that the second cell can be normally camped on. Alternatively, after determining that the second cell can be normally camped on, the terminal device camps on the second cell. All of the foregoing three cases may be understood as that the terminal device re-selects from the first cell to the second cell through cell re-selection.

702: The terminal device sends an access stratum message, where the access stratum message is used to request radio resource connection release. When the terminal device that is in inactive mode in the first cell performs inter-RAT cell (re-)selection to select or re-select to the second cell, the terminal device switches to an idle mode. In Embodiment 3 of this application, when re-selecting to the second cell, the terminal device sends, by using an AS layer, an AS message to an S-RAN to which the first cell belongs, where the AS message is used to request radio resource connection release (RRC connection release or RRC release) from the S-RAN. In this case, that the terminal device re-selects to the second cell may mean that the terminal device selects the second cell, but has not yet camped on the second cell. The terminal device still camps on the first cell. Therefore, the terminal device sends an access stratum message to the first cell, to request the radio resource connection release.

The AS message may include a cause value, and the cause value refers to the terminal device requests the radio resource connection release.

Although not shown in FIG. 7, Embodiment 3 of this application may be the same as Embodiment 1 and Embodiment 2 in that the S-RAN of the first cell and the T-RAN of the second cell access a same 5G core network device. The 5G core network device may be an AMF.

The S-RAN synchronously switches a status based on the received AS message. The S-RAN may initiate AN release to keep a status in the network consistent with the status of the terminal device, so that both the status in the network status and the status of the terminal deviceare switched to the idle mode. A process in which the S-RAN switches a status based on the AS message may include but is not limited to the following steps:

The S-RAN sends a context release request (N2 UE Context Release Request) message to the AMF.

The AMF sends context release indication information (N2 UE Context Release Command) to indicate the RAN to release the context of the terminal device. The AMF notifies the S-RAN to release a signaling plane connection/or a user plane resource between the S-RAN and the terminal device. The S-RAN deletes the context of the terminal device. The AMF indicates an SMF to notify the UPF to release an N3 interface resource. N3 is an interface between the access network device and a core network device.

It should be noted that a status synchronization process is not limited to the foregoing steps, and the AMF may alternatively perform another action to enable the network device and the terminal device to be synchronized in idle mode. The foregoing steps are merely examples for description, and it is not required to perform each listed step.

In the manner 1 in Embodiment 3 of this application, the terminal device in inactive mode performs inter-RAT cell (re-)selection, and the terminal device sends the RRC connection release request message, the S-RAN may perform an AN release procedure or another procedure based on the received RRC connection release request message, so that both a status in the network device and a status of the terminal device are the idle mode. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

### Manner 2:

FIG. 8 is a flowchart of another communication method according to Embodiment 3 of this application. As shown in FIG. 8, the method includes the following steps.

801: The terminal device re-selects from the first cell to the second cell through cell re-selection, where RATs for the first cell and the second cell are different, and the terminal device is in inactive mode in the first cell.

Step 801 is the same as step 701, and details are not described herein again.

802: The terminal device sends an access stratum message to the second cell, where the access stratum message is used to request radio resource connection release.

Different from step 702, in step 802, that the terminal device re-selects to the second cell may mean that the terminal device has camped on the second cell. The terminal device is in connected mode in the second cell. In this case, the terminal device sends an access stratum message to the T-RAN to which the second cell belongs, where the access stratum message is used to request to release a radio resource connection to the first cell.

803: The second cell sends a first message to an AMF, where the first message is used to request the AMF to indicate the first cell to release the radio resource connection.

The T-RAN to which the second cell belongs sends the first message to the AMF based on the received AS message, to request the AMF to indicate the first cell to release the radio resource connection.

804: The AMF sends RRC connection release indication information.

The AMF sends the indication information to the S-RAN based on the first message, to indicate the S-RAN to release a radio resource connection.

The S-RAN synchronously switches a status based on the received RRC connection release indication information. The S-RAN may initiate AN release to keep a status in the network consistent with the status of the terminal device, so that both the status in the network status and the status of the terminal device are switched to the idle mode. A process in which the S-RAN switches a status based on the AS message may include but is not limited to the following steps:

The S-RAN sends a context release request (N2 UE Context Release Request) message to the AMF. The AMF sends context release indication information (N2 UE Context Release Command) to indicate the RAN to release the context of the terminal device. The AMF notifies the S-RAN to release a signaling plane connection/or a user plane resource between the S-RAN and the terminal device. The S-RAN deletes the context of the terminal device. The AMF indicates an SMF to notify the UPF to release an N3 interface resource. N3 is an interface between the access network device and a core network device.

It should be noted that a status synchronization process is not limited to the foregoing steps, and another action may alternatively be performed to enable the network device and the terminal device to be synchronized in idle mode. The foregoing steps are merely examples for description, and it is not required to perform each listed step.

In this embodiment of this application, the terminal device in inactive mode performs inter-radio access technology cell re-selection, the terminal device sends a radio resource connection release request message to a network device, and the network device synchronizes a status of the terminal device and a status in the network device to an idle mode based on the received request message. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

The communication method in the embodiments of this application is described above, and a communications apparatus in the embodiments of this application is described below. For example, the apparatus may use the methods shown in Embodiment 1 to Embodiment 3. The method and the apparatus are based on a same technical idea. The method and the apparatus have similar principles for resolving problems. Therefore, for implementations of the apparatus and the method, refer to each other, and details of repeated parts are not described again.

An embodiment of this application provides a communications apparatus. The communications apparatus is configured to perform actions performed by the terminal device in Embodiment 1 and Embodiment 2. The communications apparatus includes: a processing module, configured to enable the communications apparatus to re-select from a first cell to a second cell through cell re-selection, where radio access technologies of the first cell and the second cell are different, and the communications apparatus is in radio resource control inactive mode in the first cell; and
a transceiver module, configured to send a registration request message to initiate a registration procedure.

After the communications apparatus provided in this embodiment of this application performs inter-RAT cell (re-)selection when the communications apparatus is in inactive mode, the communications apparatus initiates the registration procedure, for NAS signaling connection recovery. The communications apparatus in this embodiment of this application may enable a network device to update information when RATs are different.

The communications apparatus provided in this embodiment may be further configured to perform the method in any possible implementation of Embodiment 1 or Embodiment 2. For specific content, refer to some content about actions performed by the terminal device in the methods in Embodiment 1 and Embodiment 2. Details are not described herein again.

An embodiment of this application provides a communications apparatus. The communications apparatus is configured to perform actions performed by the terminal device in Embodiment 3. The communications apparatus includes: a processing module, configured to enable the communications apparatus to re-select from a first cell to a second cell through cell re-selection, where radio access technologies of the first cell and the second cell are different, and the communications apparatus is in radio resource control inactive mode in the first cell; and
a transceiver module, configured to send an access stratum message, where the access stratum message is used to request radio resource connection release.

The terminal apparatus provided in this embodiment of this application performs inter-RAT cell (re-)selection when the communications apparatus is in inactive mode, and sends an RRC connection release request message to a network device. The network device may perform an AN release procedure or another procedure based on the received RRC connection release request message, so that both a status in the network device and a status of the terminal device are an idle mode. Therefore, the network device and the terminal device implement status synchronization, an air interface resource waste caused when the network device sends data/signaling to the terminal device is avoided, a downlink data/signaling transmission delay is reduced, and a data loss, a call failure, or the like caused by an excessively long transmission delay is avoided.

The communications apparatus provided in this embodiment may be further configured to perform the method in any possible implementation of Embodiment 3. For specific content, refer to some content about an action performed by the terminal device in the method in Embodiment 3. Details are not described herein again.

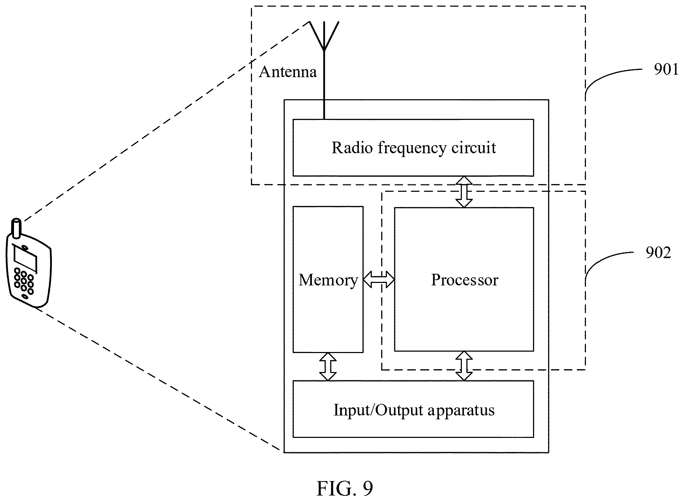

FIG. 9 is a simplified schematic structural diagram of a communications apparatus. For ease of understanding and illustration, in FIG. 9, a terminal device is used as an example of the communications apparatus. As shown in FIG. 9, the communications apparatus includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in an electromagnetic wave form. The input/output apparatus, such as a touchscreen, a display screen, or a keyboard, is mainly configured to: receive data entered by a user, and output data to the user. It should be noted that some types of terminal devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal by using the antenna in an electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna having receiving and sending functions and the radio frequency circuit may be considered as a transceiver module of the communications apparatus, and the processor having a processing function may be considered as a processing module of the communications apparatus. As shown in FIG. 9, the communications apparatus includes the transceiver module 901 and the processing module 902. The transceiver module may also be referred to as a transceiver, a transceiver machine, a transceiver apparatus, or the like. The processing module may also be referred to as a processor, a processing board, a processing apparatus, or the like. Optionally, a component for implementing a receiving function in the transceiver module 901 may be considered as a receiving module, and a component for implementing a sending function in the transceiver module 901 may be considered as a sending module. That is, the transceiver module 901 includes a receiving module and a sending module. The transceiver module sometimes may also be referred to as a transceiver machine, a transceiver, a transceiver circuit, or the like. The receiving module sometimes may also be referred to as a receiver machine, a receiver, a receiver circuit, or the like. The sending module sometimes may also be referred to as a transmitter machine, a transmitter, a transmitter circuit, or the like.

It should be understood that the transceiver module 901 is configured to perform the sending operation and the receiving operation on a terminal device side in the foregoing method embodiments, and the processing module 902 is configured to perform another operation excluding the receiving operation and the sending operation of the terminal device in the foregoing method embodiments.

For example, in an implementation, the transceiver module 901 is configured to perform a receiving operation on the terminal device side in step 202 in FIG. 2, and/or the transceiver module 901 is further configured to perform other receiving and sending steps on the terminal device side in the embodiments of this application. The processing module 902 is configured to perform step 201 in FIG. 2, and/or the processing module 902 is further configured to perform another processing step on the terminal device side in the embodiments of this application.

For another example, in another implementation, the transceiver module 901 is configured to perform a receiving operation on the terminal device side in step 402 in FIG. 4, and/or the transceiver module 902 is further configured to perform other receiving and sending steps on the terminal device side in the embodiments of this application. The processing module 902 is configured to perform step 401 in FIG. 4, and/or the processing module 902 is further configured to perform another processing step on the terminal device side in the embodiments of this application.

For another example, in another implementation, the transceiver module 901 is configured to perform a receiving operation on the terminal device side in steps 502 and 503 in FIG. 5, and/or the transceiver module 902 is further configured to perform other receiving and sending steps on the terminal device side in the embodiments of this application. The processing module 902 is configured to perform steps 501, 504, and 505 in FIG. 5, and/or the processing module 902 is further configured to perform another processing step on the terminal device side in the embodiments of this application.

For another example, in another implementation, the transceiver module 901 is configured to perform a receiving operation on the terminal device side in step 603 in FIG. 6, and/or the transceiver module 902 is further configured to perform other receiving and sending steps on the terminal device side in the embodiments of this application. The processing module 902 is configured to perform steps 601, 602, and 604 in FIG. 6, and/or the processing module 902 is further configured to perform another processing step on the terminal device side in the embodiments of this application.

For another example, in another implementation, the transceiver module 901 is configured to perform a receiving operation on the terminal device side in step 702 in FIG. 7, and/or the transceiver module 902 is further configured to perform other receiving and sending steps on the terminal device side in the embodiments of this application. The processing module 902 is configured to perform step 701 in FIG. 7, and/or the processing module 902 is further configured to perform another processing step on the terminal device side in the embodiments of this application.

For another example, in another implementation, the transceiver module 901 is configured to perform a receiving operation on the terminal device side in steps 802, 803, and 804 in FIG. 8, and/or the transceiver module 902 is further configured to perform other receiving and sending steps on the terminal device side in the embodiments of this application. The processing module 902 is configured to perform step 801 in FIG. 8, and/or the processing module 902 is further configured to perform another processing step on the terminal device side in the embodiments of this application.

When the communications apparatus is a chip apparatus or circuit, the chip apparatus may include a transceiver module and a processing module. The transceiver module may be an input/output circuit and/or a communications interface. The processing module is an integrated processor or microprocessor, or an integrated circuit on the chip.

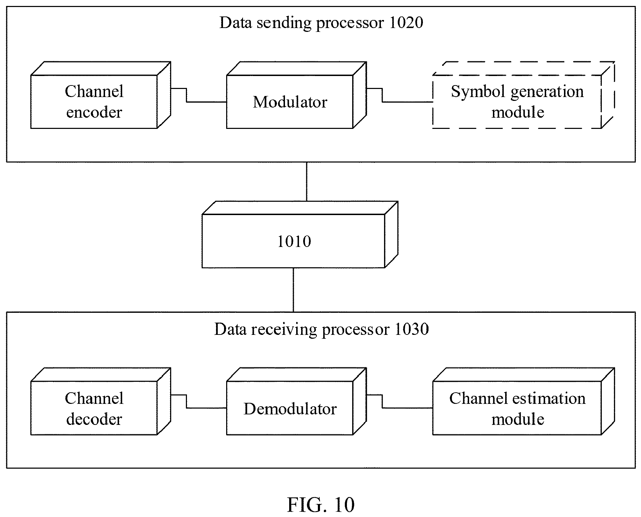

When the communications apparatus in this embodiment is a terminal device, refer to a device shown in FIG. 10. In FIG. 10, the device includes a processor 1010, a data sending processor 1020, and a data receiving processor 1030. The processing module in the foregoing embodiment may be the processor 1010 in FIG. 10, and completes a corresponding function. The transceiver module in the foregoing embodiment may be the data sending processor 1020 and/or the data receiving processor 1030 in FIG. 10. Although FIG. 10 shows a channel encoder and a channel decoder, it may be understood that these modules do not constitute a limitation on this embodiment and are merely examples.

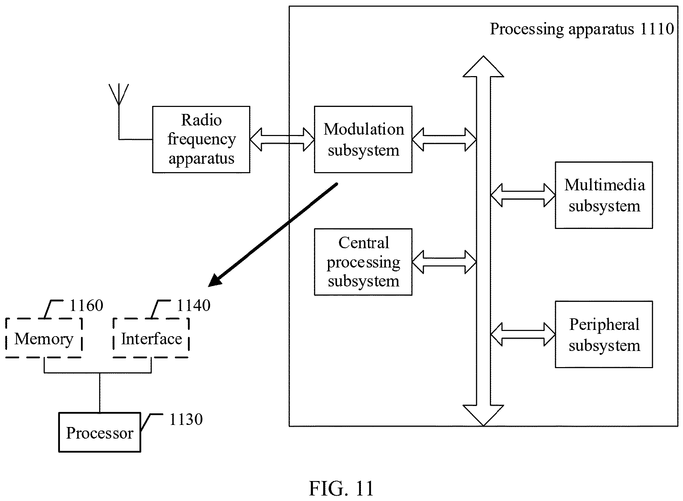

FIG. 11 shows another form of this embodiment. A processing apparatus 1110 includes modules such as a modulation subsystem, a central processing subsystem, and a peripheral subsystem. The communications apparatus in the embodiments may be used as the modulation subsystem in the processing apparatus. Specifically, the modulation subsystem may include a processor 1130 and an interface 1140. The processor 1130 completes a function of the processing module, and the interface 1140 completes a function of the transceiver module. In another variation, the modulation subsystem includes a memory 1160, a processor 1130, and a program that is stored in the memory 1160 and that can be run on the processor. When executing the program, the processor 1130 implements the method on the terminal device side in the foregoing method embodiments. It should be noted that the memory 1160 may be nonvolatile or volatile. The memory 1160 may be located in the modulation subsystem, or may be located in the processing apparatus 1110, provided that the memory 1160 can be connected to the processor 1130.

Further embodiments of the present invention are provided in the following. It should be noted that the numbering used in the following section does not necessarily need to comply with the numbering used in the previous sections.
Embodiment 1. A communication method, comprising:
   selecting or re-selecting, by a terminal device, to a second cell from a first cell, through cell selection or re-selection,
   wherein radio access technologies of the first cell and the second cell are different, the terminal device is in inactive mode in the first cell; and
   initiating, by the terminal device, a registration procedure.
Embodiment 2. The method according to embodiment 1, wherein
   the initiating, by the terminal device, a registration procedure comprises: sending, by the terminal device, first indication information, wherein the first indication information is used to notify a network device to switch the terminal device to an idle mode; or
   the method further comprises: switching, by the terminal device, to an idle mode; and
   the initiating, by the terminal device, a registration procedure comprises: sending, by the terminal device, first indication information, wherein the first indication information is used to notify a network device that the terminal device is in idle mode.
Embodiment 3. The method according to embodiment 1 or 2, wherein
   the initiating, by the terminal device, a registration procedure comprises: sending, by the terminal device, a registration request message, wherein the registration request message is used to initiate the registration procedure, and the registration request message comprises the first indication information.
Embodiment 4. The method according to embodiment 2 or 3, further comprising:
   notifying, by an access stratum of the terminal device, a non-access stratum of the terminal device to send the first indication information.
Embodiment 5. The method according to embodiment 4, wherein
   the notifying, by the access stratum of the terminal device, the non-access stratum of the terminal device to send the first indication information comprises: notifying, by the access stratum of the terminal device by using a cause value, the non-access stratum of the terminal device to send the first indication information, wherein the cause value is that the radio access technologies for the first cell and the second cell are different.
Embodiment 6. The method according to embodiment 2 or 3, further comprising:
   sending, by a non-access stratum of the terminal device, the first indication information based on information about the second cell that is received by an access stratum of the terminal device, wherein the information about the second cell comprises at least one of the following:
   identification information of the second cell, identification information of a public land mobile network supported by the second cell, or information about the radio access technology for the second cell.
Embodiment 7. The method according to embodiment 6, further comprising:
   receiving, by an access stratum, system information of the second cell, wherein the system information comprises the information about the second cell; and
   notifying, by the access stratum, the non-access stratum of the received information about the second cell.
Embodiment 8. The method according to embodiment 2, wherein
   the network device comprises an access network device or a core network device, and the core network device comprises an access and mobility management function entity.
Embodiment 9. The method according to embodiment 8, wherein
   sending the first indication information in the registration procedure comprises: sending the first indication information to the access and mobility management function entity.
Embodiment 10. The method according to any one of embodiments 1 to 9, wherein
   the radio access technology of the first cell comprises new radio or evolved universal terrestrial radio access.
Embodiment 11. The method according to any one of embodiments 1 to 10, wherein
   a registration area is allocated to the terminal device, and the first cell and the second cell are in the registration area.
Embodiment 12. The method according to any one of embodiments 1 to 11, wherein
   the registration procedure comprises an initial registration procedure or a mobility and periodic registration update procedure.
Embodiment 13. The method according to any one of embodiments 1 to 12, wherein
   the first cell and the second cell are connected to a 5G core network device.
Embodiment 14. A communication method, comprising:
   selecting or re-selecting, by a terminal device, to a second cell from a first cell, through cell selection or re-selection,
   wherein radio access technologies of the first cell and the second cell are different, and the terminal device is in inactive mode in the first cell; and
   sending, by the terminal device, an access stratum message, wherein the access stratum message is used to request radio resource connection release.
Embodiment 15. The method according to embodiment 14, wherein
   the access stratum message comprises a cause value, and the cause value refers to the terminal device requests the radio resource connection release.
Embodiment 16. The method according to embodiment 14 or 15, wherein
   the radio access technology of the first cell comprises new radio or evolved universal terrestrial radio access. Embodiment 17. The method according to any one of embodiments 14 to 16, wherein
   a registration area is allocated to the terminal device, and the first cell and the second cell are in the registration area. Embodiment 18. The method according to any one of embodiments 14 to 17, wherein
   the first cell and the second cell are connected to a 5G core network device.
Embodiment 19. A communications apparatus, comprising:
   a processing module, configured to enable the communications apparatus to re-select to a second cell from a first cell, through cell re-selection, wherein radio access technologies of the first cell and the second cell are different, and the communications apparatus is in radio resource control inactive mode in the first cell; and
   a transceiver module, configured to send a registration request message to initiate a registration procedure.
Embodiment 20. The apparatus according to embodiment 19, wherein
   the transceiver module is configured to send first indication information in the registration procedure, wherein the first indication information is used to notify a network device that the communications apparatus is in idle mode; or
   the processing module is configured to switch the communications apparatus to an idle mode, wherein the first indication information is used to notify a network device to switch the communications apparatus to the idle mode.
Embodiment 21. The apparatus according to embodiment 20, wherein
   the registration request message comprises the first indication information.
Embodiment 22. The apparatus according to embodiment 20 or 21, wherein
   an access stratum of the communications apparatus is configured to notify a non-access stratum of the terminal device to send the first indication information.
Embodiment 23. The apparatus according to embodiment 22, wherein
   that the access stratum of the communications apparatus is configured to notify a non-access stratum of the communications apparatus to send the first indication information comprises: the access stratum of the communications apparatus is configured to notify, by using a cause value, the non-access stratum of the communications apparatus to send the first indication information, wherein the cause value is that the radio access technologies for the first cell and the second cell are different.
Embodiment 24. The apparatus according to embodiment 20 or 21, wherein
   that an access stratum of the communications apparatus is configured to notify a non-access stratum of the communications apparatus to send the first indication information comprises: the non-access stratum is configured to send the first indication information based on information about the second cell that is received by the access stratum, wherein the information about the second cell comprises at least one of the following:
   identification information of the second cell, identification information of a public land mobile network supported by the second cell, or information about the radio access technology for the second cell.
Embodiment 25. The apparatus according to embodiment 24, wherein
   the access stratum of the communications apparatus is configured to receive system information of the second cell, wherein the system information comprises the information about the second cell; and
   the access stratum is configured to notify the non-access stratum of the received information about the second cell.
Embodiment 26. The apparatus according to embodiment 20, wherein
   the network device comprises an access network device or a core network device, and the core network device comprises an access and mobility management function entity.
Embodiment 27. The apparatus according to embodiment 26, wherein
   that the transceiver module is configured to send first indication information in the registration procedure comprises: the transceiver module is configured to send the first indication information to the access and mobility management function entity.
Embodiment 28. The apparatus according to any one of embodiments 19 to 27, wherein the radio access technology for the first cell comprises new radio or evolved universal terrestrial radio access.
Embodiment 29. The apparatus according to any one of embodiments 19 to 28, wherein
   a registration area is allocated to the communications apparatus, and the first cell and the second cell are in the registration area.
Embodiment 30. The apparatus according to any one of embodiments 19 to 29, wherein the registration procedure comprises an initial registration procedure or a mobility and periodic registration update procedure.
Embodiment 31. The apparatus according to any one of embodiments 19 to 30, wherein
   the first cell and the second cell are connected to a 5G core network device.
Embodiment 32. A communications apparatus, comprising:
   a processing module, configured to enable the communications apparatus to re-select to a second cell from a first cell, through cell re-selection, wherein radio access technologies of the first cell and the second cell are different, and the communications apparatus is in radio resource control inactive mode in the first cell; and
   a transceiver module, configured to send an access stratum message, wherein the access stratum message is used to request radio resource connection release.
Embodiment 33. The apparatus according to embodiment 32, wherein
   the access stratum message comprises a cause value, and the cause value refers to the communications apparatus requests the radio resource connection release.
Embodiment 34. The apparatus according to embodiment 32 or 33, wherein
   the radio access technology of the first cell comprises new radio or evolved universal terrestrial radio access.
Embodiment 35. The apparatus according to any one of embodiments 32 to 34, wherein
   a registration area is allocated to the communications apparatus, and the first cell and the second cell are in the registration area.
Embodiment 36. The apparatus according to any one of embodiments 32 to 35, wherein
   the first cell and the second cell are connected to a 5G core network device.
Embodiment 37. A communications apparatus, comprising:
   a transceiver and a processor, wherein the transceiver is configured to execute instructions for receiving and sending information; and when the instructions are run by the processor, the communications apparatus is enabled to perform the method according to any one of embodiments 1 to 13.
Embodiment 38. A communications apparatus, comprising:
   a transceiver and a processor, wherein the transceiver is configured to execute instructions for receiving and sending information; and when the instructions are run by the processor, the communications apparatus is enabled to perform the method according to any one of embodiments 14 to 18.
Embodiment 39. A computer-readable storage medium, wherein
   the computer-readable storage medium stores a computer program, and the program is executed by a processor to perform the method according to any one of embodiments 1 to 13.
Embodiment 40. A computer-readable storage medium, wherein
   the computer-readable storage medium stores a computer program, and the program is executed by a processor to perform the method according to any one of embodiments 14 to 18.
Embodiment 41. A communications apparatus, comprising a memory and a processor, wherein the memory is configured to store instructions, and the processor is configured to: execute the instructions stored in the memory, and perform the method according to any one of embodiments 1 to 13 based on the instructions stored in the memory.
Embodiment 42. A communications apparatus, comprising a memory and a processor, wherein the memory is configured to store instructions, and the processor is configured to: execute the instructions stored in the memory, and perform the method according to any one of embodiments 14 to 18 based on the instructions stored in the memory.
Embodiment 43. A communications system, comprising the communications apparatus according to any one of embodiments 19 to 31.
Embodiment 44. A communications system, comprising the communications apparatus according to any one of embodiments 32 to 36.
Embodiment 45. A computer program, wherein when the computer program is run on a computer, the computer is enabled to perform the communication method according to any one of embodiments 1 to 13.
Embodiment 46. A computer program, wherein when the computer program is run on a computer, the computer is enabled to perform the communication method according to any one of embodiments 14 to 18.

## Claims

1. A communication method, comprising:
selecting or re-selecting, by an apparatus, from a first cell to a second cell through cell selection or re-selection; and
initiating, by the apparatus, a registration procedure under conditions of: the first cell and the second cell are in a same tracking area ID list, the apparatus selects or re-selects from the first cell to the second cell, the apparatus is in inactive mode in the first cell, and radio access technologies of the first cell and the second cell are different.

2. The method according to the claim 1, wherein
the registration procedure is for Non-Access Stratus, NAS, signaling connection recovery between the terminal device and a core network.

3. The method according to claim 1 or 2, wherein
the registration procedure comprises an initial registration procedure or a mobility and periodic registration update procedure.

4. The method according to any one of claims 1 to 3, wherein
the initiating, by the apparatus, a registration procedure comprises: receiving, by a non-access stratum of the apparatus, indication information from an access stratus of the apparatus, wherein the indication information indicates that the apparatus has performed inter-radio access technology cell selection or re-selection, and initiating, by the apparatus, the registration procedure in response to the indication information.

5. The method according to any one of claims 1 to 4, wherein
the radio access technology of the first cell comprises new radio or evolved universal terrestrial radio access.

6. The method according to any one of claims 1 to 5, wherein
The first cell and the second cell are connected to a same 5G core network device.

7. An apparatus, configure to perform the method of any one of claims 1 to 6.

8. A computer readable storage medium, comprising instructions which, when executed by a processor, cause the method of any one of claims 1 to 6 is implemented.
